# EUROPEAN PATENT SPECIFICATION

(11) **EP 1 599 561 B1**
(45) Date of publication and mention of the grant of the patent: **25.07.2007**
(21) Application number: 04710032.6
(22) Date of filing: 11.02.2004
(51) Int. Cl.: C09K 19/02, C09K 19/18, C09K 19/60

(54) **ELECTRO-LUMINESCENT DEVICE AS WELL AS METHOD OF ITS PREPARATION**
ELEKTROLUMINESZENZ-VORRICHTUNG SOWIE VERFAHREN ZU IHRER HERSTELLUNG
DISPOSITIF ÉLECTROLUMINESCENT ET PROCÉDÉ DE SA PRÉPARATION

(30) Priority: 06.03.2003 EP 03004867
(43) Date of publication of application: 30.11.2005
(73) Proprietor: Merck Patent GmbH, 64293 Darmstadt (DE)
(72) Inventor: SUZUKI, Masayoshi, Shibuya-ku, Tokyo 151-0062 (JP); SATO, Hiromoto, Aiko-gun, Kanagawa Pref. 243-0303 (JP); SAWADA, Atsushi, Atsugi, Kanagawa Pref.243-0813 (JP)
(86) International application number: PCT/EP2004/001271
(87) International publication number: WO 2004/078877

(56) References cited:
- EP-A- 0 801 125
- WO-A-88/07514
- WO-A-97/07654
- DE-A- 19 607 043
- GB-A- 1 383 047
- GB-A- 2 388 599
- US-A- 3 869 195
- US-A- 4 337 999
- US-A- 4 556 287
- PATENT ABSTRACTS OF JAPAN vol. 2002, no. 09, 4 September 2002 (2002-09-04) & JP 2002 148624 A (MATSUSHITA ELECTRIC IND CO LTD), 22 May 2002 (2002-05-22)
- DATABASE WPI Section Ch, Week 198740 Derwent Publications Ltd., London, GB; Class L03, AN 1987-280456 XP002280486 & JP 62 194227 A (MATSUSHITA ELEC IND CO LTD) 26 August 1987 (1987-08-26)
- DATABASE INSPEC [Online] INSTITUTE OF ELECTRICAL ENGINEERS, STEVENAGE, GB; YAMAGUCHI R ET AL: "Fluorescent LC display using nematic LC with negative dielectric anisotropy" XP002280068 Database accession no. 7167178 & IDW '00. PROCEEDINGS OF THE SEVENTH INTERNATIONAL DISPLAY WORKSHOPS, PROCEEDINGS OF 7TH INTERNATIONAL DISPLAY WORKSHOPS - IDW'00, KOBE, JAPAN, 29 NOV.-1 DEC. 2000, 1 December 2000 (2000-12-01), pages 117-120, USA
- PATENT ABSTRACTS OF JAPAN vol. 2000, no. 22, 9 March 2001 (2001-03-09) & JP 2001 127811 A (TAMURA ELECTRIC WORKS LTD), 11 May 2001 (2001-05-11) cited in the application
- PATENT ABSTRACTS OF JAPAN vol. 1999, no. 04, 30 April 1999 (1999-04-30) & JP 11 024069 A (SANYO ELECTRIC CO LTD), 29 January 1999 (1999-01-29) cited in the application

## Description

### Field of the Invention

The present invention relates to an electro-luminescent device, which contains an electro-luminescent material, which comprises a liquid crystalline mixture containing at least one liquid crystalline compound with a negative dielectric anisotropy, as well as to a method of its preparation.

### Prior Art

Inorganic light emitting diodes have been frequently used as light emitting devices. Two classes of these inorganic materials, the one, such as ZnS, ZnSe and ZnS:Mn, which glow by accelerated charge carriers' collision with emission centers, and the other, such as GaN, SiC and GaAs, which glow by recombination of the charge carriers injected through the electrodes, are used as flat electro-luminescent displays and flat lamps.

Tang et al. describe an electro-luminescent (abbreviated as EL from now on) device using evaporated organic amorphous films (Applied Physics Letters, Vol. 51, P. 913 (1987)). Such organic EL materials are extensively developed and are now used in indicators for car use, though they can only display monochromatic light.

Furthermore, methods which give polarized light emission are described in Japanese Patent 1996-306954. In these methods, rubbed π-conjugated polymers or π-conjugated polymers on rubbed orientation layers are used as light emitting layers. Other methods which give polarized light emission are described in WO 97/07654. These methods comprise the steps of coating a mixture of liquid crystalline (abbreviated as LC from now on) compounds and organic EL materials and after aligning the mixture, UV light is irradiated to polymerize the LC materials, and hence, to fix the compounds' orientation which mixture shows polarized light emission. It is also described in Japanese Patent Application 1999-024069 that polarized light emission is achieved by applying a high voltage to a smectic liquid crystalline phase of naphthalene derivatives or biphenyl derivatives incorporated in fluorescent dye materials.

DE 196 07 043 A1 discloses a liquid crystalline medium based on a mixture of polar compounds with a negative dielectric anisotropy as well as an electro-optical display containing such a liquid crystalline medium.

A liquid crystalline mixture, which exhibits a negative dielectric anisotropy is also disclosed in EP 0 801 125 A1.

The use of tolanes as a component of a liquid crystalline mixture in electro-optical displays is disclosed in WO 88/07514 A1.

A liquid crystal element having a liquid crystal with a negative dielectric anisotropy is disclosed in JP 2002-148624.

Fluorescent liquid crystal display compositions and fluorescent liquid crystal display devices are disclosed in US-A-4,556,287 and US-A-4,337,999.

### Problems to be solved

However, the inorganic materials have difficulties in that they require quite a high driving voltage and in that the luminous efficiency for blue is not sufficient. Moreover, it is extremely difficult to get polarized light emission with inorganic materials. As for the evaporated organic films, it is difficult to obtain a uniform film for a large area and the film quality is so sensitive to the fabrication process that the process window becomes very small. It is also quite difficult to achieve polarized light emission for amorphous organic films.

For π-conjugated polymers, the rubbing process orients only a very thin surface layer of the polymer film. On the rubbed orientation layer, π-conjugated polymers align toward the rubbing direction above their glass transition temperature, however, this process is very slow due to their high viscosity, and the resulting orientation order is mostly very poor.

Liquid crystalline materials improve the orientation difficulty, however, there still remains the problem that, upon applying the electric field, the long axis of the liquid crystalline molecules tends to align along the electric field, which orientation is very detrimental to an electric charge hopping mechanism among π-conjugated systems and restricts the electronic charge transport through the medium. Because of this phenomenon, for the methods in which liquid crystalline materials are polymerized to fix their orientation, one cannot utilize the electric field to facilitate better molecular orientation, and moreover, extensive polymerization is necessary which in fact results in that less functional compounds, such as dyes and electron or hole transporting materials, are available. As for the methods in which the smectic phase of the naphthalene derivatives or the biphenyl derivatives is used, in order to suppress the molecular orientation change by the electric field, a high viscous smectic phase is necessary which limits the kind of materials, the temperature range and the process windows.

### The present invention

According to the present invention there is provided an electro-luminescent device comprising a first transparent substrate having a transparent electrode on ist inner surface and a second substrate having an electrode on ist inner surface, the space between both substrates is formed as a cell, characterized in that the cell contains an electro-luminescent material, which comprises a liquid crystalline mixture containing at least one liquid crystalline compound with a negative dielectric anisotropy.

In a preferred embodiment, the liquid crystalline compound that possesses a negative dielectric anisotropy is present in the electro-luminescent material in an amount sufficient that the whole electro-luminescent material shows a dielectric anisotropy which is ≤ 0. As a result thereof, the inconvenient state, according to which the long axis of the molecules aligns along the electric field, never occurs. Even if the content of the liquid crystalline compound with the negative dielectric anisotropy is not sufficient to cancel the positive dielectric anisotropy completely, it can diminish the positive dielectric effect and the orientation state shifts to be much preferable. That is, the restriction on variety and amount of liquid crystalline compounds and incorporating compounds is remarkably diminished which in fact enables to use vastly different kinds of compounds and makes the process window quite wide. In the case of fixing molecular orientation using polymerization, according to the present invention, a low cross-linking density system becomes available, since the inconvenient state, according to which the long axis of the molecules aligns along the electric field, does not occur, or the positive dielectric effect is considerably diminished. Thus, the content of the compounds without polymerizable functional group can be increased and more variety of compounds can be utilized. The process window becomes wider, too, since controlling the cross-linking density is not very strict. Moreover, alignment becomes better, since, for the system with a negative dielectric anisotropy, the electric field helps molecules to align in the preferable direction besides alignment layer.

According to the present invention, the compound with a negative dielectric anisotropy can take any structure as long as it has a strong electronegative group, such as cyano group and halogen, along its short axis direction.

In a preferred embodiment, the liquid crystalline compound with a negative dielectric anisotropy contains at least one of the following units a to f: 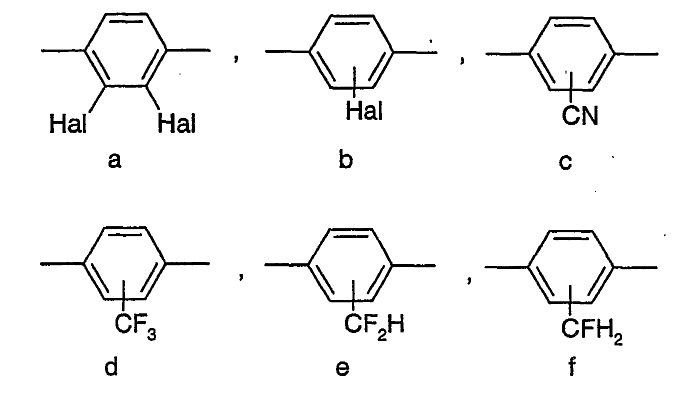 wherein Hal is fluorine, chlorine or bromine, preferably fluorine.

The compounds with the structure a, preferably with Hal is fluorine, are particularly preferred, due to their stability and compatibility.

According to the present invention, the liquid crystalline mixtures that contain at least one liquid crystalline compound with a negative dielectric anisotropy provide excellent performance as mentioned above.

Furthermore, compounds whose ionization potential is lower than 6.1 eV lower the driving voltage remarkably. As these compounds, those with a tolane unit are preferred because a tolane unit can be easily introduced into a liquid crystalline compound.

Preferred are tolanes of the formula I

R¹(-A¹-Z¹)ₘ-A³-C≡C-A⁴(-Z²-A²)ₙ-R² I

in which
- R¹ and R²: are identical or different and are each, independently of one another, H, halogen (F, Cl, Br or I) or a linear or branched, optionally chiral alkyl or alkoxy radical having from 1 to 15 carbon atoms which is unsubstituted or monosubstituted or polysubstituted by halogen and in which one or more CH₂ groups may each be replaced, independently of one another, by -O-, -S-, -CO-, -CO-O-, -O-CO-, -O-CO-O-, -CH=CH-, -CH=CF-, -CF=CF-, -C=C- or -◇- in such a way that heteroatoms are not linked directly to one another, -CN, -SCN, -NCS, -SF₅, -SCF₃, -CF₃, -CF=CF₂, -CF₂CF₂CF₃, -OCF₃, -OCHF₂, -CF₂CH₂CF₃ or -OCH₂CF₂CHFCF₃,

- A¹, A², A³ and A⁴: are identical or different and are in each case, independently of one another,
a) trans-1,4-cyclohexylene, in which, in addition, one or more non-adjacent CH₂ groups may be replaced by -O- and/or -S- and in which, in addition, one or more H atoms may be replaced by F,
b) 1,4-phenylene, in which one or two CH groups may be replaced by N and in which, in addition, one or more H atoms may be replaced by halogen (F, Cl, Br or I), -CN, -CH₃, -CHF₂, -CH₂F, -OCH₃, -OCHF₂ or -OCF₃,
c) a radical from the group consisting of bicyclo[1.1.1]pentane-1,3-diyl, bicyclo[2.2.2]octane-1,4-diyl, spiro[3.3]-heptane-2,6-diyl, naphthalene-2,6-diyl, decahydro-naphthalene-2,6-diyl, 1,2,3,4-tetrahydronaphthalene-2,6-diyl and piperidine-1,4-diyl, or
d) 1,4-cyclohexenylene,
- Z¹ and Z²: are identical or different and are in each case, independently of one another, -O, -CH₂O-, -OCH₂-, -CO-O-, -O-CO-, -CF₂O-, -OCF₂-, -CF₂CF₂-, -CH₂CF₂-, -CF₂CH₂-, -CH₂CH₂-, -CH=CH-, -CH=CF-, -CF=CH-, -CF=CF-, -CF=CF-COO-, -O-CO-CF=CF-, -C≡C- or a single bond, and
- m and n: are identical or different and are, independently of one another, 0 or 1,
with the proviso that at least one of the groups A¹, A², A³ and A⁴ is selected from the units a to f.

Preferred compounds of the formula I are compounds of the partial formulae la (having two rings), Ib to Ie (having three rings) and If to Ii (having four rings):

R¹-A³-C≡CA⁴-R² Ia

R¹-A¹-A³-C≡C-A⁴-R² Ib

R¹-A¹-Z¹-A³-C≡C-A⁴-R² Ic

R¹-A³-C≡C-A⁴-A²-R² Id

R¹-A³-C≡C-A⁴-Z²-A²-R² Ie

R¹-A¹-A³-C≡C-A⁴-A²-R² If

R¹-A¹-Z¹-A³-C≡C-A⁴-A²-R² Ig

R¹-A¹-A³-C≡C-A⁴-Z²-A²-R² Ih

R¹-A¹-Z¹-A³-C≡C-A⁴-Z²-A²-R² Ii

in which R¹, R², A¹, A², A³, A⁴, Z¹ and Z² are as defined above and wherein at least one of the groups A¹, A², A³ and A⁴ is selected from the units a to f.

Particularly preferred compounds of the formula I and formulae la to li are those in which at least one of the groups A¹, A², A³ and A⁴ is a 2,3-dihalogeno-1,4-phenylene group (unit a). In this group halogen is fluorine, chlorine or bromine, preferably fluorine.

Especially preferred are compounds of formula I and formulae Ia to Ii, wherein A³ or A⁴ is a 2,3-difluoro-1,4-phenylene group.

Examples of the especially preferred representatives of compounds of the formula I and formulae la to li having a 2,3-difluoro-1,4-phenylene group are illustrated in the following:

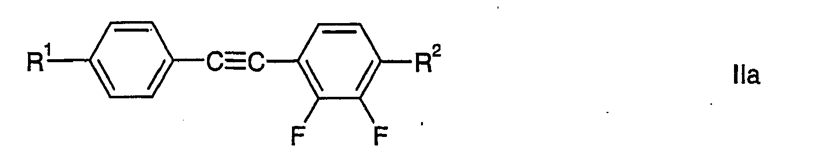

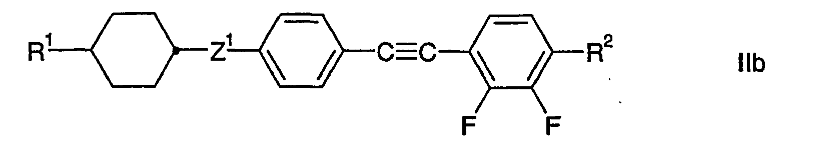

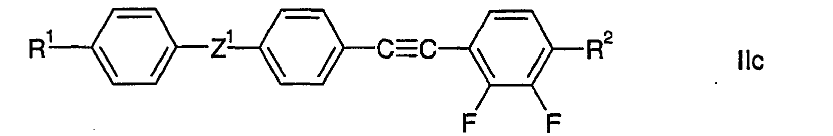

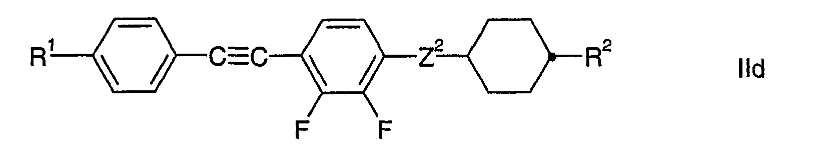

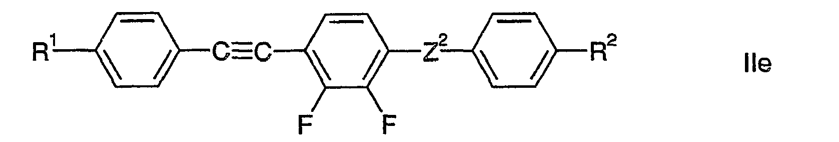

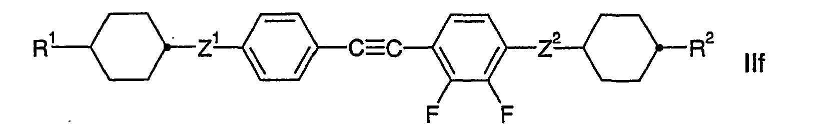

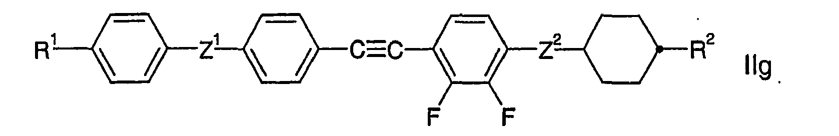

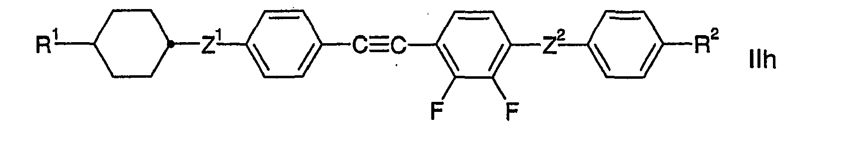

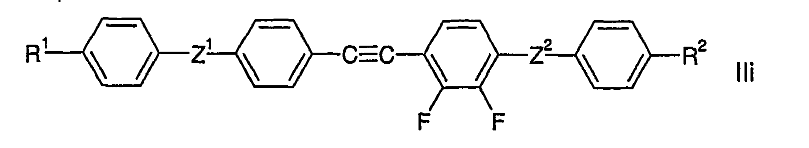

Preference is given to compounds of the formula I, formulae Ia to II as well as formulae IIa to IIi in which R¹ and R² are identical or different and are each, independently of one another, a linear or branched, preferably linear, optionally chiral alkyl or alkoxy radical having from 1 to 15 carbon atoms, preferably 1 to 10 carbon atoms, which is unsubstituted or monosubstituted or polysubstituted by halogen.

If R¹ and/or R² in the formulae above and below is an alkyl radical, this may be straight-chain or branched. It is particularly preferably straight-chain, has 2, 3, 4, 5, 6 or 7 carbon atoms and accordingly is methyl, ethyl, propyl, butyl, pentyl, hexyl or heptyl, furthermore octyl, nonyl, decyl, undecyl, dodecyl, tridecyl, tetradecyl or pentadecyl.

If R¹ and/or R² is an alkyl radical in which one CH₂ group has been replaced by -O-, this may be straight-chain or branched. It is preferably straight-chain and has from 1 to 7 carbon atoms. The first CH₂ group of this alkyl radical has particularly preferably been replaced by -O-, so that the radical R¹ and/or R² attains the meaning alkoxy and is, in particular, methoxy, ethoxy, propoxy, butoxy, pentyloxy, hexyloxy or heptyloxy, furthermore octyloxy, nonyloxy, decyloxy, undecyloxy, dodecyloxy, tridecyloxy, tetradecyloxy or pentadecyloxy.

A¹, A², A³ and A⁴ in formula I, formulae la to Ii and IIa to IIi are preferably identical or different and are in each case, independently of one another, a trans-1,4-cyclohexylene, in which, in addition, one or more non-adjacent CH₂ groups may be replaced by -O- and in which, in addition, one or more H atoms may be replaced by F, or a 1,4-phenylene, in which one or two CH groups may be replaced by N and in which, in addition, one or more H atoms may be replaced by halogen (F, Cl or I), -CN, -CH₃, -CHF₂, -CH₂F, -OCH₃, -OCHF₂ or -OCF₃ but with the proviso that wherein at least one of the groups A¹, A², A³ and A⁴ is selected from the units a to f.

Preferably, Z¹ and Z² are identical or different and are in each case, independently of one another, -O-, -CH₂O-, -OCH₂-, -CO-O-, -O-CO-, -CF₂O-, -OCF₂- or a single bond, more preferably a single bond.

In particular preferred are compounds of the formulae IIa and IIb wherein R¹ is an alkyl group whose carbon number m is from 1 to 7, wherein R² is an alkoxy group whose carbon number n is from 1 to 7 and wherein Z¹ is a single bond: 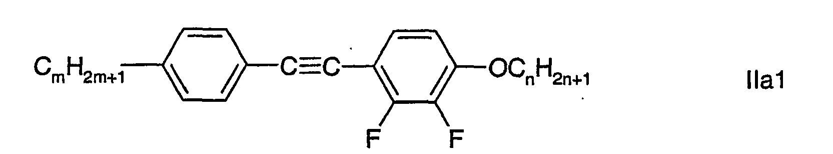 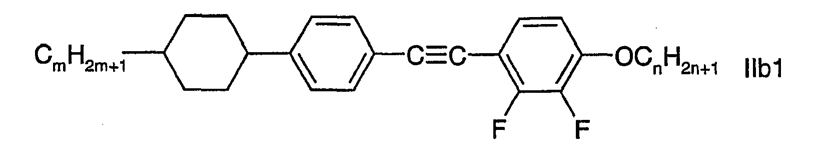 because they possess a negative dielectric anisotropy, an ionization potential lower than 6.1 eV and compatibility to other liquid crystalline compounds simultaneously.

In another embodiment of the present invention, the liquid crystalline mixtures contain at least one liquid crystalline compound with a negative dielectric anisotropy of formula III

R¹(-A¹-Z¹)ₘ-A³-(Z²-A²)ₙ-R² III

in which
- R¹ and R²: are identical or different and are each, independently of one another, H, halogen (F, Cl, Br or I) or a linear or branched, optionally chiral alkyl or alkoxy radical having from 1 to 15 carbon atoms which is unsubstituted or monosubstituted or polysubstituted by halogen and in which one or more CH₂ groups may each be replaced, independently of one another, by -O-, -S-, -CO-, -CO-O-, -O-CO-, -O-CO-O-, -CH=CH-, -CH=CF-, -CF=CF-, -C≡C- or -◇- in such a way that heteroatoms are not linked directly to one another, -CN, -SCN, -NCS, -SF₅, -SCF₃, -CF₃, -CF=CF₂, -CF₂CF₂CF₃, -OCF₃, -OCHF₂, -CF₂CH₂CF₃ or -OCH₂CF₂CHFCF₃,
- A¹ and A²: are identical or different and are in each case, independently of one another,
a) trans-1,4-cyclohexylene, in which, in addition, one or more non-adjacent CH₂ groups may be replaced by -O- and/or -S- and in which, in addition, one or more H atoms may be replaced by F,
c) 1,4-phenylene, in which one or two CH groups may be replaced by N and in which, in addition, one or more H atoms may be replaced by halogen (F, Cl, Br or I), -CN, -CH₃, -CHF₂, -CH₂F, -OCH₃, -OCHF₂ or -OCF₃,
c) a radical from the group consisting of bicyclo[1.1.1]pentane-1,3-diyl, bicyclo[2,2.2]octane-1,4-diyl, spiro[3.3]-heptane-2,6-diyl, naphthalene-2,6-diyl, decahydronaphthalene-2,6-diyl, 1,2,3,4-tetrahydronaphthalene-2,6-diyl and piperidine-1,4-diyl, or
d) 1,4-cyclohexenylene,
- A³: is selected from the units a to f, 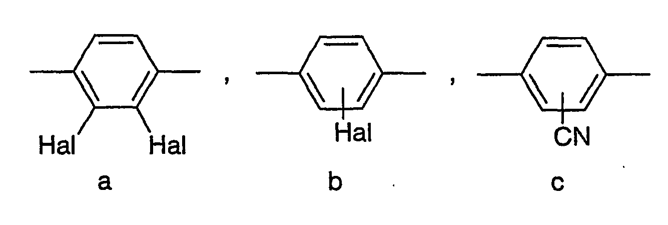 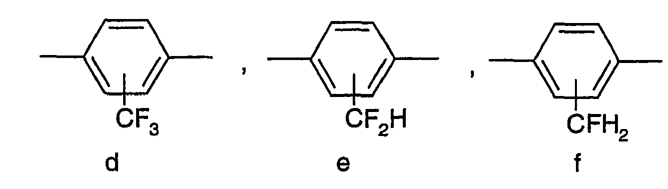 Hal is fluorine, chlorine or bromine, preferably fluorine
- Z¹ and Z²: are identical or different and are in each case, independently of one another, -O-, -CH₂O-, -OCH₂-, -CO-O-, -O-CO-, -CF₂O-, -OCF₂-, -CF₂CF₂-, -CH₂CF₂-, -CF₂CH₂-, -CH₂CH₂-, -CH=CH-, -CH=CF-, -CF=CH-, -CF=CF-, -CF=CF-COO-, -O-CO-CF=CF-, -C≡C- or a single bond, and
- m and n: are identical or different and are, independently of one another, 0,1, 2 or 3, wherin the sum (m+n) is 1, 2 or 3.

Particularly preferred compounds of the formula III are those in which at least group A³ is a 2,3-dihalogeno-1,4-phenylene group (unit a). In this group halogen is fluorine, chlorine or bromine, preferably fluorine. Therefore, especially preferred are compounds of formula I, wherein A³ is a 2,3-difluoro-1,4-phenylene group.

Examples of the especially preferred representatives of compounds of the formula III having a 2,3-difluoro-1,4-phenylene group are illustrated in the following:

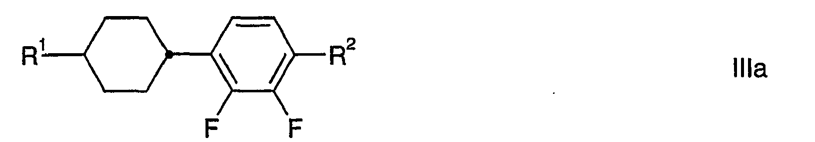

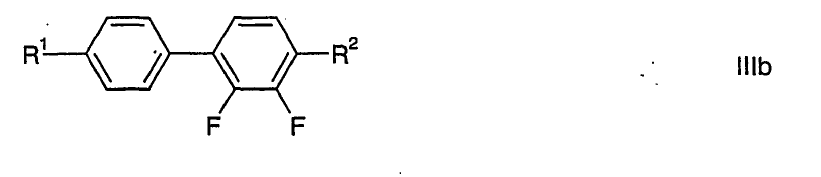

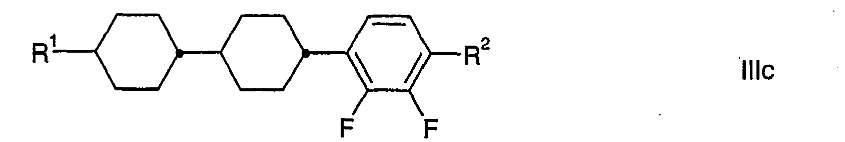

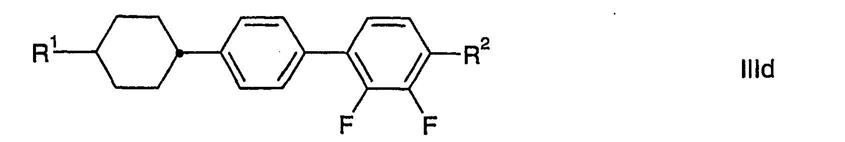

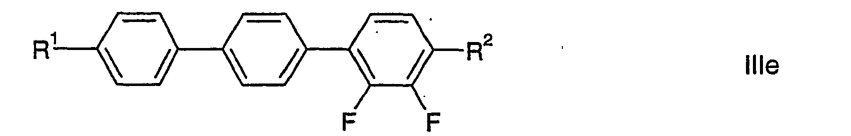

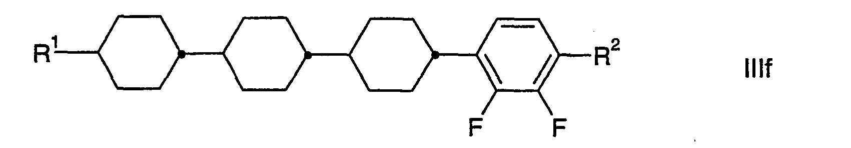

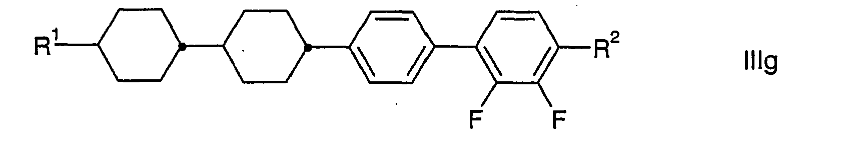

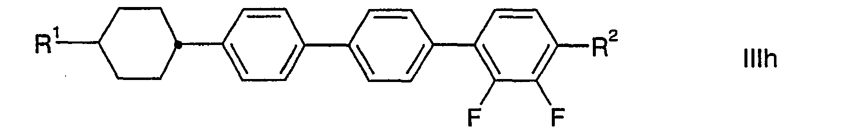

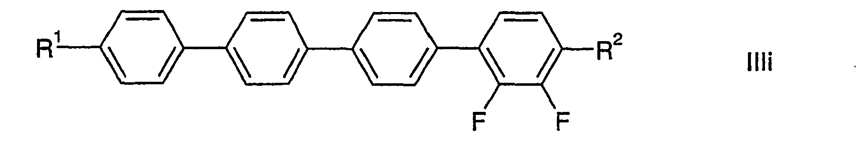

Preference is given to compounds of the formula III as well as formulae IIIa to IIIi in which R¹ and R² are identical or different and are each, independently of one another, a linear or branched, preferably linear, optionally chiral alkyl or alkoxy radical having from 1 to 15 carbon atoms, preferably 1 to 10 carbon atoms, which is unsubstituted or monosubstituted or polysubstituted by halogen.

A¹ and A² in formula III and IIIa to IIIi are preferably identical or different and are in each case, independently of one another, a trans-1,4-cyclohexylene, in which, in addition, one or more non-adjacent CH₂ groups may be replaced by -O- and in which, in addition, one or more H atoms may be replaced by F, or a 1,4-phenylene, in which one or two CH groups may be replaced by N and in which, in addition, one or more H atoms may be replaced by halogen (F, Cl or I), -CN, -CH₃, -CHF₂, -CH₂F, -OCH₃, -OCHF₂ or -OCF₃.

Preferably, Z¹ and Z² are identical or different and are in each case, independently of one another, -O-, -CH₂O-, -OCH₂-, -CO-O-, -O-CO-, -CF₂O-, -OCF₂- or a single bond, more preferably a single bond.

In particular preferred are compounds of the formulae IIIa and IIIc wherein R¹ is an alkyl group whose carbon number m is from 1 to 7 and wherein R² is an alkyl or alkoxy group whose carbon number n is from 1 to 7:

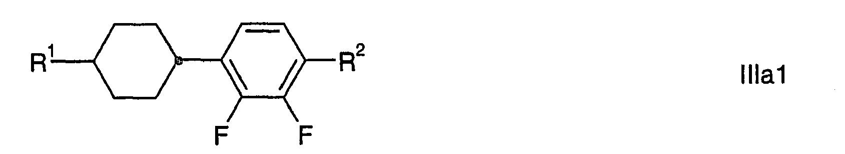

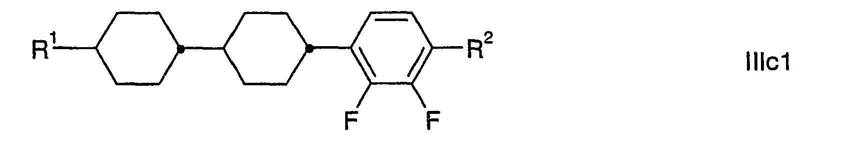

For the purpose to obtain light emission by applying voltage, it is not necessary to align the molecular axis along a certain direction. However, even in such a case, it is important that the liquid crystalline mixture contains at least one compound with a negative dielectric anisotropy. In contrast to amorphous materials, liquid crystalline materials have the following advantages: They can form a large area uniform film because of their fluidity, they do not crystallize by Joule's heat during operation and their light emission properties are insensitive to defects such as domain boundary. In order to make the best use of these advantages, it is necessary to suppress the phenomenon that the long axis of the liquid crystalline molecules aligns along the operating electric field and charge transport through the liquid crystalline medium is hindered which results in no light emission. According to the present invention, this is easily achieved by using the liquid crystalline mixture which contains at least one compound with a negative dielectric anisotropy without sacrificing other important properties.

For the application in back light units of liquid crystalline display devices, polarized light emission is preferred from the point of view of efficiency. Molecular orientation alignment is necessary to achieve polarized light emission. As described in WO 97/07654 and Japanese Patent Application 1999-024069, liquid crystalline materials provide better orientation with preferable alignment process compared with the methods in which polymer films are elongated.

According to the present invention, the liquid crystalline mixtures which contain at least one compound with a negative dielectric anisotropy not only provide a better orientation but also suppress the phenomenon that the liquid crystalline molecules align along the electric field. Thus, they have great advantage in vast choice of compounds and wide process window. The negative dielectric anisotropy also allows the electric field to facilitate liquid crystalline alignment because the electric field direction and short axis of the molecules agree perfectly.

According to the present invention, a transparent electrode composed of ITO etc. is fabricated on the first transparent substrate composed of glass, polycarbonate, polyethersulfone etc.. Polyimide or its precursor, polyamic acid, is coated as an alignment layer on the first substrate, and after baking the substrate to evaporate the solvent or to facilitate imidization, the alignment layer is rubbed. Here, instead of the polyimide a mixture of poly(styrenesulfonate) and poly(2,3-dihydrothieno[3,4-b]-1,4-dioxin)PEDOT) can be used to facilitate the hole injection process. The first substrate can be rubbed without the alignment layer depending on the materials. Metal with small work function is formed on the second substrate as counter electrode, and the surface is rubbed if necessary. An alignment layer such as polyimide can also be applied on the second substrate, which alignment layer can be rubbed after baking. This rubbing is not definitely necessary and can be omitted if the metal surface is easily scratched. A photo-alignment layer, as it is described in AM-LCD'96/IDW'96 Digest of Technical Papers P. 337 (1996), whose functional group polymerizes selectively upon polarized light irradiation, is preferred because it avoids mechanical rubbing, and hence, allows soft metal materials' use as electrode. Polymer or glass beads or polymer pillars that are fabricated on either substrate are used as spacer, and two substrates are put together with suitable sealing agent which is formed on either substrate and polymerized using heat or UV-light. The obtained cell is cut into pieces, if necessary. The liquid crystalline mixtures that contain at least one compound with a negative dielectric anisotropy is mixed with the fluorescent dye and hole or electron transport materials depending on necessity, and then introduced into the cell either at nematic phase or isotropic phase. The introduction port is filled with UV-polymerizing agent. When plural pixels with different colors are desirable, the sealing agent can be patterned as a desirable number of pixels, and liquid crystalline mixtures that show each color can be introduced from each port at the same time and/or sequentially. At a suitable temperature the system shows liquid crystalline phase and tends to align so that the long axis of the molecules agree with the rubbing direction. Keeping the system in the nematic phase at least at room temperature is most preferably for alignment. In the case that the orientation control is difficult, such as the system possesses only a smectic phase, it is recommendable to heat the system into the isotropic phase and to cool down slowly. Such a process improves the liquid crystalline alignment considerably. According to the present invention, it is further preferred to apply an electric field during the cooling process because the electric field direction agrees with the short axis of the molecules. Such a geometry improves the liquid crystalline alignment. This geometry also holds good during operating voltage application, that is, it avoids the inconvenient phenomenon that the long axis of the molecules aligns along the electric field and leads to no light emission as in the case of conventional liquid crystalline materials.

According to the present invention, the above mentioned preferred effects exist also in systems in which a polymerizable liquid crystalline monomer material, such as a liquid crystalline diacrylate, is incorporated. After introducing the liquid crystalline materials into a cell, the molecules are aligned in the liquid crystalline phase. During this process or cooling process, it is possible to apply an electric field to facilitate the molecular alignment. Such a procedure improves the liquid crystalline alignment considerably. The system also has a preferred geometry during operation.

According to the present invention, the following process is also possible. A metal or ITO electrode is formed on the second substrate and an alignment layer, such as polyimide, is coated and rubbed. A cell is fabricated with tentative sealing and.the liquid crystalline mixture with the polymerizable agent, such as liquid crystalline diacrylate, is introduced into the cell. An electric field is applied during the cooling process in order to achieve a precisely controlled orientation. After fixing the orientation using UV-irradiation, the second substrate is removed and then the counter electrode using a small work function metal is formed. Here, even Li or Li-containing alloy, that is very active in the air, is applicable. In this case, after the electrode formation, the cell will be covered with epoxy resin or inactive metal. This method is preferred because it enables to use a very small work function metal, and hence, electron injection efficiency becomes quite high which in fact results in a high light emission efficiency.

With respect to the energy levels for each layer material, it is preferred that in the sequence from the hole injecting layer toward the electron injecting layer, each layer's ionization potential becomes higher and higher and/or each layer's energy of lowest unoccupied molecular orbit becomes lower and lower. Even if one of these conditions is met, it will be effective for highly efficient charge injection, and hence, high luminescence efficiency. When a luminous material is incorporated, at least one luminous material's ionization potential is higher than those of the neighboring layers and/or at least one luminous material's energy of lowest unoccupied molecular orbit is lower than those of the neighboring layers. When there are two kinds of neighboring material, it is desired that the above conditions are satisfied for both materials, but only for one material it is effective as well. It is desired that the above conditions are satisfied for both ionization potentials and the energy of lowest unoccupied molecular orbit, but only for one of them it is effective as well.

### Preferred embodiments of the present invention

Hereafter the present invention will be explained more precisely.

### Invention Form 1

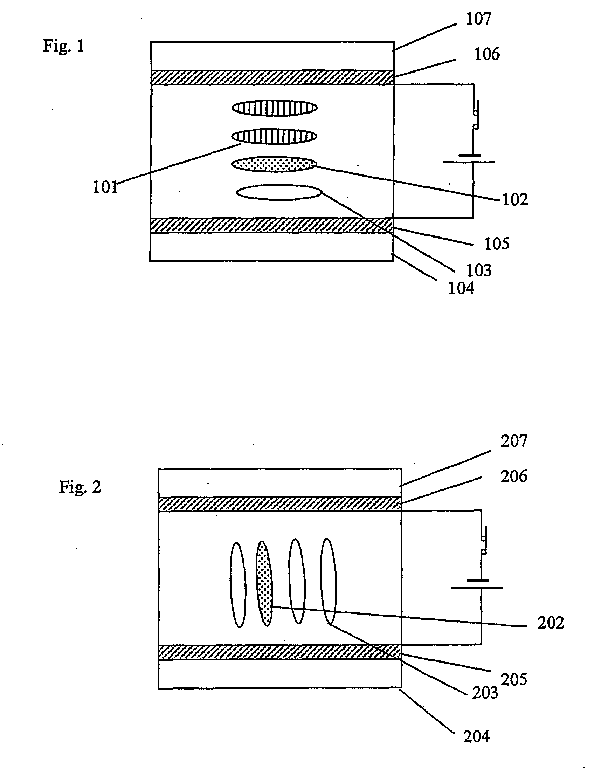

The concept of the EL device according to the present invention using the liquid crystalline light emitting compounds is shown in Fig. 1. Since the system contains the compound with a negative dielectric anisotropy 101, it possesses a negative dielectric anisotropy and, upon applying an electric field, the long axis of the molecules align parallel to the substrate. This geometry agrees well with that geometry in which injected charge carriers transport quite smoothly through the liquid crystalline medium. On the other hand, when the system does not contain the compound with a negative dielectric anisotropy, upon applying an electric field, the long axis of the molecules align perpendicular to the substrate. In this geometry, injected charge carriers are almost impossible to transport through the liquid crystalline medium.

Fig. 1 shows a cross section of a luminescent device illustrating the concept of invention form 1.

### Explanation of the symbols:

- 101: compound with a negative dielectric anisotropy
- 102: fluorescent dye
- 103: liquid crystalline mixture
- 104: the first transparent substrate
- 105: transparent electrode
- 106: electrode
- 107: the second substrate

According to the present invention, as the compound with a negative dielectric anisotropy, in principle, any compound can be applied as long as it possesses a negative dielectric anisotropy. Preferred examples of liquid crystalline compounds with a negative dielectric anisotropy contain at least one of the units a to f. These examples are the compounds with groups having a high electronegativity, such as halogen, cyano group, trifluoromethyl group, attached to the benzene ring forming a certain angle against the molecule's long axis. The compounds which have two fluorine substituents (structure a) are particularly preferred from the point of view of both electronegativity strength and heat or light stability.

According to the present invention, liquid crystalline EL materials with low ionization potential are preferred from the point of view of operating voltage. The compounds whose ionization potential is lower than 6.1 eV are particularly preferred since they show a remarkable low operating voltage. As such compounds, tolane derivatives have been found to show excellent effects, among tolane derivatives, the compounds with structure II are particularly preferred because they possess a negative dielectric anisotropy and a potential energy lower than 6.1 eV as well. In structure I, there is no limitation in the number of carbon atoms in R, however, unnecessarily many carbon atoms are detrimental to a liquid crystal. Therefore, the number of carbon atoms in R is preferably in the range between 1 and 7, and particularly preferred in the range between 1 and 5.

According to the present invention, some liquid crystalline EL materials emit light themselves, however, some do not emit because the recombination ratio between electrons and holes is so small or their emission wavelength is in the UV-region. In this case a dye material can be doped to promote the emission efficiency in the visible region. Fluorescent dye 102 are mainly used as dye material, dichroic dyes are used for polarized light emission. Applicable dyes are acridine derivatives, such as, 3,6-bis-dimethylaminoacridine, 9-aminoacridine, 9-(4-diethylamino-1-methylbutylamino)-3-chloro-7-methoxyacridine, arylnaphthalene-sulfonates, such as, N-methyl-2-anilinonaphthalene-6-sulfonate, 2-p-toluidinyl-naphthalene-6-sulfonate, cyanine dyes, such as, 1,1'-dihexyl-2,2'-oxacarbocyanine, 3,3'-dipropylthia-dicarbocyanine(iodide), 5-[(3-sulfopropyl-2(3H)-benzoxazolylidene)-2-butenylidene]-1,3-dibutyl-2-thiobarbituric acid, and other dyes, such as, tetramethyldiaminodiphenylketoimine hydrochloride, 1,6-diphenyl-1,3,5-hexatriene, 2',4',5',7'-tetrabromofluorescein, 2,7-diamino-9-phenylphenanthrium-10-ethylbromide, 9-(o-carboxyphenyl)-6-hydroxy-3H-Xanthen-3-one, 4-benzoylamido-4'-aminostilbene-2,2'-disulfonate, bis[3-phenyl-5-oxoisoxazol-4-yl]pentamethineoxonol, bis[1,3-dibutylbarbituric-acid(5)]pentamethineoxonol, α(9,11,13,15-cis,trans,trans,cis) octadecatetraenoic acid, β(9,11,13,15-all-trans)octadecatetraenoic acid, perylene (dibenz[de,kl]anthracene), N-phenyl-1-naphthylamine, pyrene (benzo[def]phenantherene), 2,8-dimethyl-3,7-diamino-5-phenylphenazium chloride, 4-phenylspyro[furan-2(3H),1'-futalan]-3,3'-dione, o-phthalic dicarboxaldehyde, 1-dimethylaminonaphthalene-5-sulfonyl chloride, fluorescein isothiocyanate, 7-chloro-4-nitrobenzo-2-oxa-1,3-diazole, N-dansyl aziridine, N-(1-anilinonaphthyl-4)maleimide, 7-dimethylamino-4-methylcoumarynyl)maleimide, N-(3-pyrene)maleimide, Coumarin 6, BBOT(2,5-bis-(5-tert-butyl-2-benz-oxazolyl)thiophene), rubrene, Nile Red. Applicable dyes are not necessarily limited to these dyes. The dyes either can be used as a single compound or several dyes can be mixed if necessary. Complexes, such as (8-hydroxyquinoline) aluminium, 3(tris(2-phenylpyridine)iridium and oligomers, such as polyfluorene and polyalkylthiophene are also applicable.

According to the present invention, EL devices can be fabricated using the following method. A transparent electrode 105, such as ITO, is formed on the first transparent substrate 104 on which a few hundred-nm high pillar spacers (not shown in Fig. 1) are formed scores of µm apart from one after another using photo-lithography technique. There is no limitation to the height of the pillars, from the point of view of lower operating voltage, 50 nm to 1 µm is preferred and 100 nm to 300 nm is particularly preferred. As for the quality of the material for the pillars, though every thing is applicable as long as it is insulating, photo-sensitive acrylate is preferably used from the point of view of stress and processability. Beads spacers used for liquid crystalline displays are also applicable instead of pillar spacers. Glass is usually used for the transparent substrate, however, according to the necessity, plastics or plastics covered with thin glass are also applicable. A sealing agent (not shown in Fig. 1) is painted on the first transparent substrate 104 on which spacers have been formed. The second substrate 107, on which, besides ITO, a small work function metal, such as Li-Al (Li 0.2 %) alloy is formed as a counter electrode 106, is aligned with the first transparent substrate 104 and the sealing agent is hardened by heat or UV treatment while applying pressure to keep the two substrates gap properly. A liquid crystalline mixture 103 which contains at least one compound with a negative dielectric anisotropy and having optionally a dye material incorporated, is introduced into the above fabricated cell and the filling port is fixed with UV polymerizable resin. Upon applying an electric field, the incorporated dye starts light emission above a certain operating voltage. Since the system possesses a negative dielectric anisotropy, the molecular orientation direction by the electric field agrees well with the molecular orientation in which injected charges are transported smoothly. The case that the liquid crystalline molecules are oriented perpendicular to the substrates as shown in Fig. 2 never occurs.

Fig. 2 shows such a cross section of a luminescent device illustrating the concept of the prior art.

### Explanation of the symbols:

- 202: fluorescent dye
- 203: liquid crystalline mixture
- 204: the first transparent substrate
- 205: transparent electrode
- 206: electrode
- 207: the second substrate

Here, only sandwiching electrodes are explained. Not explained are in-plane switching electrodes, which are fabricated on the same substrate. However, according to the present invention, the net effects are exactly the same for both cases.

According to the present invention, in principle, every process can be performed in air atmosphere. In the case that a part of the liquid crystalline compounds is easy to be oxidized or the metal electrode is too active and quick to erode, the cell fabricating process can be performed under inert gas atmosphere, such as nitrogen.

### Invention Form 2

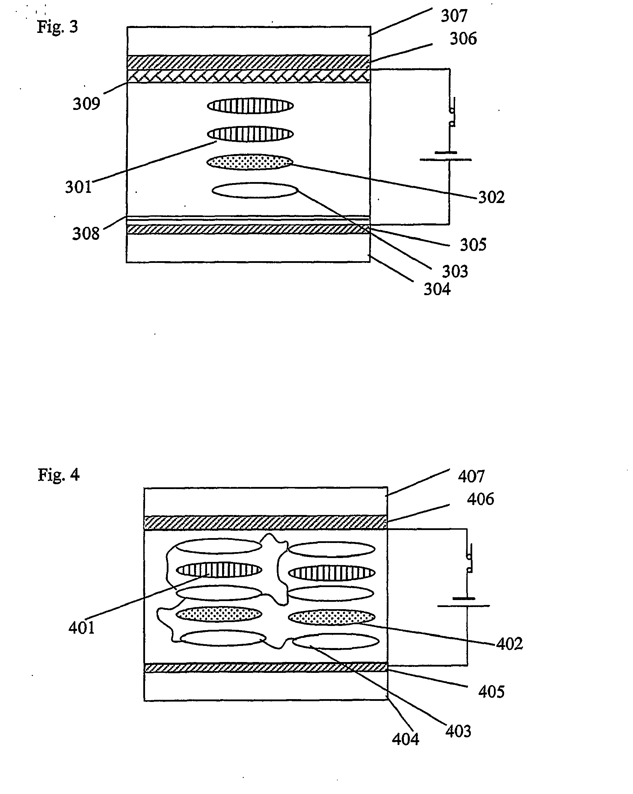

Another form of this invention is explained in Fig. 3. The difference between invention form 1 and 2 is that at least one substrate is subject to an alignment treatment.

Fig. 3 shows a cross section of a luminescent device illustrating the concept of invention form 2.

### Explanation of the symbols:

- 301: compound with a negative dielectric anisotropy
- 302: fluorescent dye
- 303: liquid crystalline mixture
- 304: the first transparent substrate
- 305: transparent electrode
- 306: electrode
- 307: the second substrate
- 308: alignment layer
- 309: alignment layer

In the same way as in invention form 1, a transparent electrode **305,** such as ITO, is formed on the first transparent substrate **304** on which a few hundred-nm high pillar spacers (not shown in Fig. 3) are formed scores of µm apart from one after another using photo-lithography technique. The electrode surface is rubbed using a cloth in order to control the orientation of the liquid crystals. An alignment layer **308,** composed of polyimide etc., can be coated on the first transparent substrate **304** and be rubbed after baking. For the alignment layer **308,** besides polyimide, also a mixture of poly(styrene-sulfonate) and poly(2,3-dihydrothieno[3,4-b]-1,4-dioxin) PEDOT) can be applied in order to facilitate the hole injection from the transparent electrode **305.** The surface of the second substrate **307,** on which, besides ITO, a small work function metal electrode **306** is formed, is not necessarily rubbed. But it may be rubbed to make the liquid crystalline alignment stronger. Photo-alignment technique is preferably applied for aligning liquid crystals on the second substrate **307,** especially, when the inconvenience, as electrode peeling or surface scratching, occurs, due to a mechanical treatment, like rubbing on a coated alignment layer **309** like polyimide, since metal is generally soft and a small work function metal is particularly weak against mechanical treatment. Photo-alignment technique is also applicable to the first transparent substrate **304.**

The first transparent substrate **304** and the second substrate **307,** at least one of both is treated for liquid crystal alignment, are aligned and fixed using an adhesive agent which is hardened either by heat or UV light. In the same way as in invention form 1, a liquid crystalline mixture that contains at least one compound with a negative dielectric anisotropy and having optionally incorporated a dye material, is introduced into the fabricated cell and the filling port is fixed with a UV hardening resin. The liquid crystalline compounds align along the alignment treatment direction. The cell may be heated above the isotropic temperature of the liquid crystalline compounds and cooled down slowly in order to get a better alignment. This process eliminates the problem, such as flow alignment. Applying a voltage during the cooling process, if necessary, further improves the liquid crystal alignment. Here, according to the present invention, since the system possesses a negative dielectric anisotropy, long axis of the molecules align parallel to the substrate surface, and such an inconvenience that the long axis of the molecules align along the electric field (shown in Fig. 2) never occurs.

Upon applying a voltage, the incorporated dye starts emitting light above a certain operating voltage. Since the system possesses a negative dielectric anisotropy, the molecular alignment regulated by the electric field agrees well with the molecular orientation in which the injected charges transport smoothly and such an inconvenience that the liquid crystalline molecules stand perpendicular against the substrate as shown in Fig. 2 never occurs. Because of the alignment treatment, when the dye is a dichroic dye, its transition moments lie along the liquid crystal director, and hence, the emitted light is polarized.

Here, only sandwiching electrodes are explained. Not explained are in-plane switching electrodes, which are fabricated on the same substrate. However, according to the present invention, the net effects are exactly the same for both cases. In the case of in-plane switching electrodes, it is desired that the initial liquid crystal alignment is perpendicular to the electric field, and the alignment treatment described with respect to invention form 2 is preferred. Both electrodes can be opaque in this in-plane switching mode, and the photo-alignment technique is preferred, since the metal electrodes are mechanically weak.

### Invention Form 3

Another form of this invention is explained in Fig. 4. The difference between invention form 1 and 3 is that the liquid crystalline mixture includes a polymerizable compound. As polymerizable compound, every compound is suitable as long as it is compatible with the liquid crystalline compounds and polymerizes by heat or light treatment. A photo-polymerizable compound is preferred from the point of view of process simplicity. A compound with a mesogenic group is preferred from the point of view of compatibility with the liquid crystalline compounds and the alignment ability. A compound with more than two functional groups per molecule is preferred from the point of view of stabilizing the orientation.

Fig. 4 shows a cross section of a luminescent device illustrating the concept of invention form 3.

### Explanation of the symbols:

- 401: compound with a negative dielectric anisotropy
- 402: fluorescent dye
- 403: polymerizable compounds
- 404: the first transparent substrate
- 405: transparent electrode
- 406: electrode
- 407: the second substrate

Examples of photo-polymerizable compounds are, as described in SPIE, Vol. 1455, p. 110, mixtures of thiolene and mercaptan (commercial name: NOA65), vinyl cinnamate derivatives or acrylate derivatives. Liquid crystalline materials with photo-sensitive groups which are described in Liquid Crystals, Vol. 18, p. 319 (1995) also give preferred effects. Not only low molecular weight compounds but also oligomers with functional groups are applicable.

In the same way as in invention form 1, a transparent electrode **405,** such as ITO, is formed on the first transparent substrate **404** on which a few hundred-nm high pillar spacers (not shown in Fig. 4) are formed scores of µm apart from one after another using photo-lithography technique. The first transparent substrate **404** and the second substrate **407,** on which a counter electrode **406** is formed using, besides ITO, a small work function metal, for example Li-Al (Li 0.2 %) alloy, are aligned and fixed using an adhesive agent which is hardened either by heat or UV light. The fabricated cell is filled with a liquid crystalline mixture which contains at least one compound with a negative dielectric anisotropy and a polymerizable compound and having optionally incorporated a dye material and the filling port is fixed with UV hardening resin. The liquid crystalline compounds take a planer alignment. The cell can be heated above the isotropic temperature of the liquid crystalline compounds and cooled down slowly to make this planer alignment better, if necessary. The polymerization reaction or the cross-linking reaction is conducted using UV irradiation. A small amount of a photo-initiator may be added to the liquid crystalline compounds in order to facilitate the polymerization or cross-linking reaction. This process can be either or both liquid crystal orientation stabilization and/or pixel wall formation depending on whether a photo-mask is used or not. It also depends on the amount of polymerizable compound. Upon applying a voltage, the incorporated dye starts emitting light above a certain operating voltage. Since the system possesses a negative dielectric anisotropy, the molecular alignment regulated by the electric field agrees well with the molecular orientation in which the injected charges transport smoothly and such an inconvenience that the liquid crystalline molecules stand perpendicular to the substrate as shown in Fig. 2 never occurs.

The polymerization and/or the cross-linking improves the mechanical strength and it provides the advantage that the cell becomes quite resistible against bending, which in fact is particularly suitable for plastic substrates.

Here, only sandwiching electrodes are explained. Not explained are in-plane switching electrodes, which are fabricated on the same substrate. However, according to the present invention, the net effects are exactly the same for both cases.

### Invention Form 4

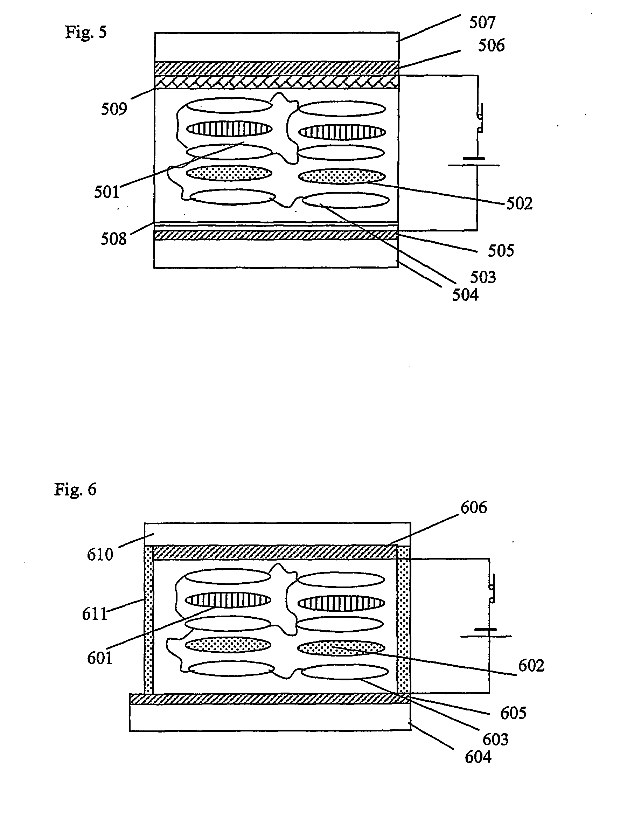

Another form of this invention is explained in Fig. 5. The difference between invention form 3 and 4 is that at least one substrate is subject to an alignment treatment.

Fig. 5 shows a cross section of a luminescent device illustrating the concept of invention form 4.

### Explanation of the symbols:

- 501: compound with a negative dielectric anisotropy
- 502: fluorescent dye
- 503: polymerizable compounds
- 504: the first transparent substrate
- 505: transparent electrode
- 506: electrode
- 507: the second substrate
- 508: alignment layer
- 509: alignment layer

In the same way as in invention form 2, a transparent electrode **505,** such as ITO, is formed on the first transparent substrate **504** on which a few hundred-nm high pillar spacers (not shown in the Fig. 5) are formed scores of µm apart from one after another using photo-lithography technique. The electrode surface is rubbed using a cloth in order to control the orientation of the liquid crystals. An alignment layer **508,** composed of polyimide etc., can be coated on the first transparent substrate **504** and be rubbed after baking. For the alignment layer **508,** besides polyimide, also a mixture of poly(styrene-sulfonate) and poly(2,3-dihydrothieno[3,4-b]-1,4-dioxin) PEDOT) can be applied in order to facilitate the hole injection from the transparent electrode **505.** The surface of the second substrate **507,** on which, besides ITO, a small work function metal electrode **506** is formed, is not necessarily rubbed, but it may be rubbed to make the liquid crystalline alignment stronger. Photo-alignment technique is preferably applied for aligning liquid crystals on the second substrate **507,** especially, when the inconvenience, as electrode peeling or surface scratching, occurs, due to a mechanical treatment, like rubbing on a coated alignment layer **509** like polyimide, since metal is generally soft and a small work function metal is particularly weak against mechanical treatment. Photo-alignment technique is also applicable to the first transparent substrate **504.**

The first transparent substrate **504** and the second substrate **507,** at least one of both is treated for liquid crystal alignment, are aligned and fixed using an adhesive agent which is hardened either by heat or UV light. In the same way as in invention form 3, a liquid crystalline mixture that contains at least one compound with a negative dielectric anisotropy and having optionally incorporated a dye material, is introduced into the fabricated cell and the filling port is fixed with a UV hardening resin. The liquid crystalline compounds align along the alignment treatment direction. The cell may be heated above the isotropic temperature of the liquid crystalline compounds and cooled down slowly in order to get a better alignment. This process eliminates the problem, such as flow alignment. Applying a voltage during the cooling process, if necessary, further improves the liquid crystal alignment. Here, according to the present invention, since the system possesses a negative dielectric anisotropy, long axis of the molecules align parallel to the substrate surface, and such an inconvenience that the long axis of the molecules align along the electric field (shown in Fig. 2) never occurs. After achieving the necessary alignment of the liquid crystalline compounds, in the same way as in invention form 3, the polymerization reaction or the cross-linking reaction is conducted using UV irradiation. A small amount of a photo-initiator may be added to the liquid crystalline compounds in order to facilitate the polymerization or cross-linking reaction. As in invention form 3, this process can be either or both liquid crystal orientation stabilization and/or pixel wall formation depending on whether a photo-mask is used or not. It also depends on the amount of polymerizable compound.

Upon applying a voltage, the incorporated dye starts emitting light above a certain operating voltage. Since the system possesses a negative dielectric anisotropy, the molecular alignment regulated by the electric field agrees well with the molecular orientation in which the injected charges transport smoothly and such an inconvenience that the liquid crystalline molecules stand perpendicular against the substrate as shown in Fig. 2 never occurs. Because of the alignment treatment, when the dye is a dichroic dye, its transition moments lie along the liquid crystal director, and hence, the emitted light is polarized.

The polymerization and/or the cross-linking improves the mechanical strength and it provides the advantage that the cell becomes quite resistible against bending, which in fact is particularly suitable for plastic substrates.

For the system where a polymerizable compound is used and the initial orientation of the liquid crystalline compounds is fixed, as in invention forms 3 and 4, the inconvenient state that the long axis of the molecules align along the electric field is prevented to occur if the polymerization degree and/or the cross-linking density is high enough. However, to obtain a high polymerization degree and/or cross-linking density, a high content of a polymerizable compound is required. According to the present invention, since the inconvenient state that the long axis of the molecules align along the electric field never occurs, the content of compounds without polymerizable functional group can be increased and a greater variety of compounds can be utilized. The process window becomes wider, too, since controlling the degree of polymerization and/or cross-linking density is not so strict. If the content of the compound with a negative dielectric anisotropy is not high enough as to give the whole system a negative dielectric anisotropy, long axis of molecules align along the electric field. According to the present invention, even in that case, owing to the compound with a negative dielectric anisotropy, the threshold voltage for aligning long axis of the molecules along the electric field becomes higher and the inconvenient state in which long axis of the molecules align along the electric field is practically suppressed. Thus, in this case, too, the advantages, that a greater variety of compounds can be utilized and the process window becomes wider, exist.

Here, only sandwiching electrodes are explained. Not explained are in-plane switching electrodes, which are fabricated on the same substrate. However, according to the present invention, the net effects are exactly the same for both cases. In the case of in-plane switching electrodes, it is desired that the initial liquid crystal alignment is perpendicular to the electric field, and the alignment treatment described with respect to invention form 2 is preferred. Both electrodes can be opaque in this in-plane switching mode, and the photo-alignment technique is preferred, since the metal electrodes are mechanically weak.

### Invention Form 5

Another form of this invention is explained in Fig. 6. The difference between invention form 3 and 5 is that after the polymerization and/or the cross-linking reaction, the second substrate is removed and the electrode is formed on the polymerized and/or cross-linked liquid crystalline compounds.

Fig. 6 shows a cross section of a luminescent device illustrating the concept of invention forms 5 and 7.

### Explanation of the symbols:

- 601: compound with a negative dielectric anisotropy
- 602: fluorescent dye
- 603: polymerizable compounds
- 604: the first transparent substrate
- 605: transparent electrode
- 606: electrode
- 607: the second substrate
- 610: sealing layer
- 611: wall

In the same way as in invention form 3, a transparent electrode **605,** such as ITO, is formed on the first transparent substrate **604** on which a few hundred-nm high pillar spacers (not shown in the Fig. 6) are formed scores of µm apart from one after another using photo-lithography technique. At the same time, walls **611** are formed instead of a sealing agent but in the same pattern as the sealing agent in invention form 3. The first transparent substrate **604** and the second substrate **607** on which the electrode is formed, if necessary, are aligned and fixed using a pressure device. The cell is filled with a liquid crystalline mixture that contains at least one compound with a negative dielectric anisotropy and a polymerizable compound having optionally incorporated a dye material. The liquid crystalline compounds take a planer alignment. The cell can be heated above the isotropic temperature of the liquid crystalline compounds and cooled down slowly to make this planer alignment better, if necessary. Applying a voltage during the cooling process, if necessary, further improves the liquid crystalline planer alignment. Here, according to the present invention, since the system possesses a negative dielectric anisotropy, the long axis of the molecules align parallel to the substrate surface, and such an inconvenience that the long axis of the molecules align along the electric field (shown in Fig. 2) never occurs. If a proper alignment is achieved without applying a voltage, the electrode on the second substrate is not necessary.

The polymerization and/or the cross-linking reaction is conducted using UV irradiation. A small amount of a photo-initiator may be added to the liquid crystalline compounds in order to facilitate the polymerization and/or cross-linking reaction. As in invention form 3, this process can be either or both liquid crystal orientation stabilization and/or pixel wall formation depending on whether a photo-mask is used or not. It also depends on the amount of polymerizable compound. After the reaction, the second substrate is removed. A small work function metal is formed in a desired pattern through a proper mask as the second electrode **606** on the polymerized and/or cross-linked liquid crystalline compounds. If this metal is active, the whole device is sealed after the second electrode **606** formation without exposing the device to the air. This sealing layer **610** is formed by subsequently depositing an inactive substance on the electrode **606** and/or coating with epoxy resin.

The second substrate surface may be modified with a fluorinated polymer or a coupling agent to achieve a small surface energy for easy removal of the second substrate.

Upon applying a voltage, the incorporated dye starts emitting light above a certain operating voltage. Since the system possesses a negative dielectric anisotropy, the molecular alignment regulated by the electric field agrees well with the molecular orientation in which the injected charges transport smoothly and such an inconvenience that the liquid crystalline molecules stand perpendicular against the substrate as shown in Fig. 2 never occurs. The polymerization and/or the cross-linking improves the mechanical strength and it provides the advantage that the cell becomes quite resistible against bending, which in fact is particularly suitable for plastic substrates, as in invention form 3. In invention form 5, the counter electrode can be formed on the liquid crystalline compounds, and it is relatively easier, compared with invention forms 1 to 4, to seal the whole device after the electrode formation without exposing to the air. This enables to use a quite small work function metal as an electrode, which in fact leads to the advantage that devices with a high charge injection efficiency, in other words, a high light emission efficiency are easily processed.

### Invention Form 6

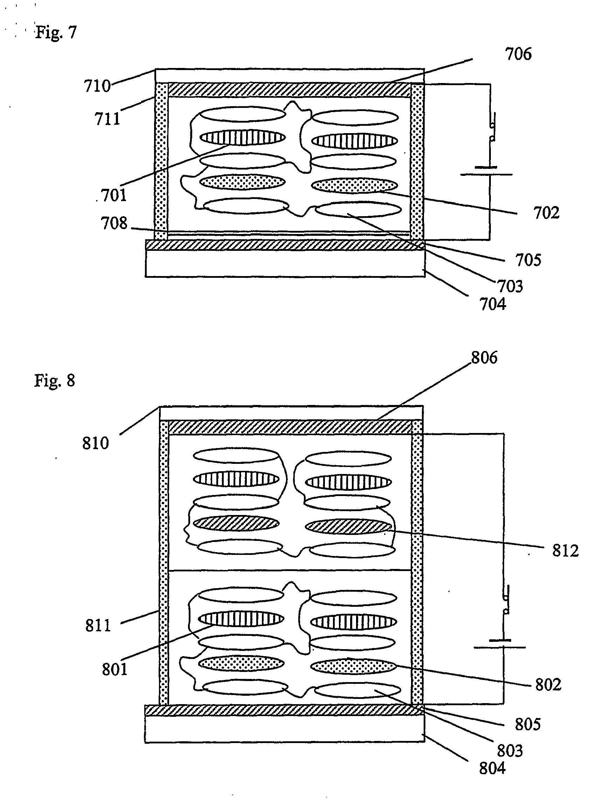

Another form of this invention is explained in Fig. 7. The difference between invention form 5 and 6 is that at least one substrate is subject to an alignment treatment.

Fig. 7 shows a cross section of a luminescent device illustrating the concept of invention form 6 and 8.

### Explanation of the symbols:

- 701: compound with a negative dielectric anisotropy
- 702: fluorescent dye
- 703: polymerizable compounds
- 704: the first transparent substrate
- 705: transparent electrode
- 706: electrode
- 708: alignment layer
- 710: sealing layer
- 711: wall

In the same way as in invention form 2, a transparent electrode **705,** such as ITO, is formed on the first transparent substrate **704** on which a few hundred-nm high pillar spacers (not shown in Fig. 7) are formed scores of µm apart from one after another using photo-lithography technique. The electrode surface is rubbed using a cloth in order to control the orientation of the liquid crystals. An alignment layer **708,** composed of polyimide etc., can be coated on the first transparent substrate **704** and be rubbed after baking in order to achieve a better alignment of the liquid crystalline compounds. For the alignment layer **708,** besides polyimide, also a mixture of poly(styrene-sulfonate) and poly(2,3-dihydrothieno[3,4-b]-1,4-dioxin) PEDOT) can be applied in order to facilitate the hole injection from the transparent electrode **705.** In the same way as in invention form 5, walls **711** are formed at the device boundaries when the spacers are formed. They also can be formed after introducing the liquid crystalline mixture through photo-polymerization of the polymerizable compound incorporated in the liquid crystalline mixture using a photo-mask. The first transparent substrate **704** and the second substrate on which the electrode is formed, if necessary, are aligned and fixed using a pressure device. The cell is filled with a liquid crystalline mixture that contains at least one compound with a negative dielectric anisotropy and a polymerizable compound having optionally incorporated a dye material. The liquid crystalline compounds align along the rubbing direction. The cell can be heated above the isotropic temperature of the liquid crystalline compounds and cooled down slowly to make this alignment better, if necessary. This process eliminates the problem, such as flow alignment. Applying a voltage during the cooling process, if necessary, further improves the liquid crystal planer alignment.

Here, according to the present invention, since the system possesses a negative dielectric anisotropy, the long axis of the molecules align parallel to the substrate surface, and such an inconvenience that the long axis of the molecules align along the electric field (shown in Fig. 2) never occurs. If a proper alignment is achieved only with the alignment treatment of the first substrate, the electrode or alignment layer on the second substrate and voltage applying process are not necessary. After achieving the necessary alignment of the liquid crystalline compounds, in the same way as in invention form 3, the polymerization reaction or the cross-linking reaction is conducted using UV irradiation. A small amount of a photo-initiator may be added to the liquid crystalline compounds in order to facilitate the polymerization or cross-linking reaction. This process can be either or both liquid crystal orientation stabilization and/or pixel wall formation depending on whether a photo-mask is used or not. It also depends on the amount of polymerizable compound. In the same way as in invention form 5, the second substrate is removed after the polymerization and/or cross-linking reaction. A small work function metal is formed in a desired pattern through a proper mask as the second electrode **706** on the polymerized and/or cross-linked liquid crystalline compounds. If this metal is active, the whole device is sealed after the second electrode **706** formation without exposing the device to the air. This sealing layer **710** is formed by subsequently depositing an inactive substance on the electrode **706** and/or coating with epoxy resin.

The second substrate surface may be coated with a fluorinated alignment layer or modified with PTFE as described by Wittman et al. in Nature, Vol. 352, p. 414 (1991) for a good alignment and an easy removal of the second substrate.

Upon applying a voltage, the incorporated dye starts emitting light above a certain operating voltage, as in invention form 5. Since the system possesses a negative dielectric anisotropy, the molecular alignment regulated by the electric field agrees well with the molecular orientation in which the injected charges transport smoothly and such an inconvenience that the liquid crystalline molecules stand perpendicular against the substrate as shown in Fig. 2 never occurs. The polymerization and/or the Cross-linking improves the mechanical strength and it provides the advantage that the cell becomes quite resistible against bending, which in fact is particularly suitable for plastic substrates as in invention form 3. In invention form 6, the counter electrode can be formed on the liquid crystalline compounds, and it is relatively easier, compared with invention forms 1 to 4, to seal the whole device after the electrode formation without exposing to the air. This enables to use quite a small work function metal as an electrode, which in fact leads to the advantage that devices with a high charge injection efficiency, in other words, a high light emission efficiency are easily processed. In invention form 6, since the liquid crystalline compounds align uniaxialy, when the dye is a dichroic dye, the emitted light is polarized.

### Invention Form 7

Another form of this invention is explained in Fig. 6. The difference between invention form 5 and 7 is the method to fabricate the polymerized and/or the cross-linked liquid crystalline compounds.

In the same way as in invention form 1, a transparent electrode **605,** such as ITO, is formed on the first transparent substrate **604.** As in invention form 5 a few hundred-nm high pillar spacers (not shown in the Fig. 6) and walls **611** may be formed using photo-lithography technique, if necessary. A film is formed on the electrode **605** which is composed of a liquid crystalline mixture that contains at least one compound with a negative dielectric anisotropy and a polymerizable compound having optionally incorporated a dye material dissolved in a suitable organic solvent. The film is coated from the solution using spin-coating, printing, dipping or blade coating technique. After baking the substrate and vapourising the solvent, the liquid crystalline compounds take a planer alignment. Here, incorporating a small amount of a detergent facilitates the planer alignment. The polymerization and/or the cross-linking reaction is conducted using UV irradiation. A small amount of a photo-initiator may be added to the liquid crystalline mixture to facilitate the polymerization and/or the cross-linking reaction.

As detergents, fluorinated detergents, for example, FC-171 (Commercial name: 3M), are particularly effective. Detergents that have photo-reactive functional groups, for example, FX-13 (Commercial name: 3M) are also preferred. The detergent is incorporated into the polymerizable agent in an amount of from 0.6 to 1 % by weight.

The film thickness can be controlled by the concentration of the solution, the spin speed for spin-coating, the dipping speed for dipping, and the gap between the substrates and the blade for printing and blade coating technique. A film thickness of 50 nm to 1 µm is preferred from the point of view of lowering the operation voltage, and a film thickness of 100 nm to 300 nm is particularly preferred.

In the same way as in invention form 5, a small work function metal is formed in a desired pattern through a proper mask as the second electrode **606** on the polymerized and/or cross-linked liquid crystalline compounds. If this metal is active, the whole device is sealed after the formation of the second electrode **606** without exposing the device to the air. This sealing layer **610** is formed by subsequently depositing an inactive substance on the electrode **606** and/or coating with epoxy resin.

Upon applying a voltage, the incorporated dye starts emitting light above a certain operating voltage. Since the system possesses a negative dielectric anisotropy, the molecular alignment regulated by the electric field agrees well with the molecular orientation in which the injected charges transport smoothly and such an inconvenience that the liquid crystalline molecules stand perpendicular against the substrate as shown in Fig. 2 never occurs. The polymerization and/or the cross-linking improves the mechanical strength and it provides the advantage that the cell becomes quite resistible against bending, which in fact is particularly suitable for plastic substrates, as in invention form 3. In invention form 7, the counter electrode can be formed on the liquid crystalline compounds, and it is relatively easier, compared with invention forms 1 to 4, to seal the whole device after the electrode formation without exposing to the air. This enables to use a quite small work function metal as an electrode, which in fact leads to the advantage that devices with a high charge injection efficiency, in other words, a high light emission efficiency are easily processed.

Here only the process, in which the pixel walls are formed after introducing the liquid crystalline mixture into the cell, is described. It is also possible to form the pixel walls using photo-lithography technique on the first substrate at the same time of forming pillar spacers, and fill each pixel with the liquid crystalline mixture containing different color material, if necessary, using e.g. an ink-jet printing technique.

### Invention Form 8

Another form of this invention is explained in Fig. 7. The difference between invention form 7 and 8 is that at least one substrate is subject to an alignment treatment.

In the same way as in invention form 2, a transparent electrode **705,** such as ITO, is formed on the first transparent substrate **704.** As in invention form 6, a few hundred-nm high pillar spacers (not shown in Fig. 7) may be formed scores of µm apart from one after another using photo-lithography technique, if necessary. Also walls **711** may be formed at the device boundaries when the spacers are formed. They also can be formed after introducing the liquid crystalline mixture through photo-polymerization of the polymerizable compound incorporated in the liquid crystalline mixture using a photo-mask, if necessary. The electrode surface is rubbed using a cloth in order to control the orientation of the liquid crystals. An alignment layer **708,** composed of polyimide etc., can be coated on the first transparent substrate **704** and be rubbed after baking in order to achieve a better alignment of the liquid crystalline compounds. For the alignment layer **708,** besides polyimide, also a mixture of poly(styrene-sulfonate) and poly(2,3-dihydrothieno[3,4-b]-1,4-dioxin) PEDOT) can be applied in order to facilitate the hole injection from the transparent electrode **705.** An alignment layer **708** composed of a fluorinated polymer or PTFE, as described in Nature, Vol. 352, p. 414 (1991) by Wittman et al., may be used to obtain a better alignment.

In the same way as in invention form 7, a film is formed on the first substrate subjected to an alignment treatment which is composed of a liquid crystalline mixture that contains at least one compound with a negative dielectric anisotropy and a polymerizable compound having optionally incorporated a dye material dissolved in a suitable organic solvent. The film is coated from the solution using spin-coating, printing, dipping or blade coating technique. After baking the substrate and vapourising the solvent, the liquid crystalline compounds take a planer alignment. Here, incorporating a small amount of a detergent facilitates the planer alignment. The polymerization and/or the cross-linking reaction is conducted using UV irradiation. A small amount of a photo-initiator may be added to the liquid crystalline mixture to facilitate the polymerization and/or the cross-linking reaction. As in invention form 6, this process can be either or both liquid crystal orientation stabilization and/or pixel wall formation depending on whether a photo-mask is used or not. It also depends on the amount of polymerizable compound. Since the first substrate has an alignment treatment, the liquid crystalline compounds align along the alignment treatment direction. This alignment is fixed by the polymerization and/or the cross-linking reaction.

In the same way as in invention form 7, a small work function metal is formed in a desired pattern through a proper mask as the second electrode **706** on the polymerized and/or cross-linked liquid crystalline compounds. If this metal is active, the whole device is sealed after the formation of the second electrode **706** without exposing the device to the air. This sealing layer **710** is formed by subsequently depositing an inactive substance on the electrode **706** and/or coating with epoxy resin.

In the similar way as in invention form 7, upon applying a voltage, the incorporated dye starts emitting light above a certain operating voltage. Since the system possesses a negative dielectric anisotropy, the molecular alignment regulated by the electric field agrees well with the molecular orientation in which the injected charges transport smoothly and such an inconvenience that the liquid crystalline molecules stand perpendicular against the substrate as shown in Fig. 2 never occurs. Since the orientation of the liquid crystalline compounds is fixed through the polymerization and/or the cross-linking reaction, an ionic transport that was observed rarely if ever at extremely high voltage applications is suppressed. The polymerization and/or the cross-linking improves the mechanical strength and it provides the advantage that the cell becomes quite resistible against bending, which in fact is particularly suitable for plastic substrates, as in invention form 3. In invention form 8, the counter electrode can be formed on the liquid crystalline compounds, and it is relatively easier, compared with invention forms 1 to 4, to seal the whole device after the formation of the electrode without exposing to the air. This enables to use a quite small work function metal as an electrode, which in fact leads to the advantage that devices with a high charge injection efficiency, in other words, a high light emission efficiency are easily processed. In invention form 8, since the liquid crystalline compounds have an uniaxial alignment, when the incorporated dye is dichroic, the emitted light is polarized.

As in invention form 7, it is also possible to form the pixel walls using photo-lithography technique on the first substrate at the same time of forming pillar spacers, and fill each pixel with the liquid crystalline mixture containing different color material, if necessary, using e.g. an ink-jet printing technique.

### Invention Form 9

Another form of this invention is explained in Fig. 8. The difference between invention form 7 and 9 is that the layer of the liquid crystalline compounds is divided into two layers, a hole transport layer and an electron transport layer.

Fig. 8 shows a cross section of a luminescent device illustrating the concept of invention form 9.

### Explanation of the symbols:

- 801: compound with a negative dielectric anisotropy
- 802: fluorescent dye or hole transport facilitating compound
- 803: polymerizable compounds
- 804: the first transparent substrate
- 805: transparent electrode
- 806: electrode
- 810: sealing layer
- 811: wall
- 812: the second fluorescent dye or electron transport facilitating compound

In the same way as in invention form 7, a transparent electrode **805,** such as ITO, is formed on the first transparent substrate **804.** As in invention form 6, a few hundred-nm high pillar spacers (not shown in Fig. 8) may be formed scores of µm apart from one after another using photo-lithography technique, if necessary. Also walls **811** may be formed at the device boundaries when the spacers are formed. They also can be formed after introducing the liquid crystalline mixture through photo-polymerization of the polymerizable compound incorporated in the liquid crystalline mixture using a photo-mask, if necessary. A film is formed on the electrode 805 which is composed of a liquid crystalline mixture that contains at least one compound with a negative dielectric anisotropy and a polymerizable compound having optionally incorporated a material that facilitates the hole transport, for example, amine derivatives, represented by structures III(a), III(b) and III(c), dissolved in a suitable organic solvent.

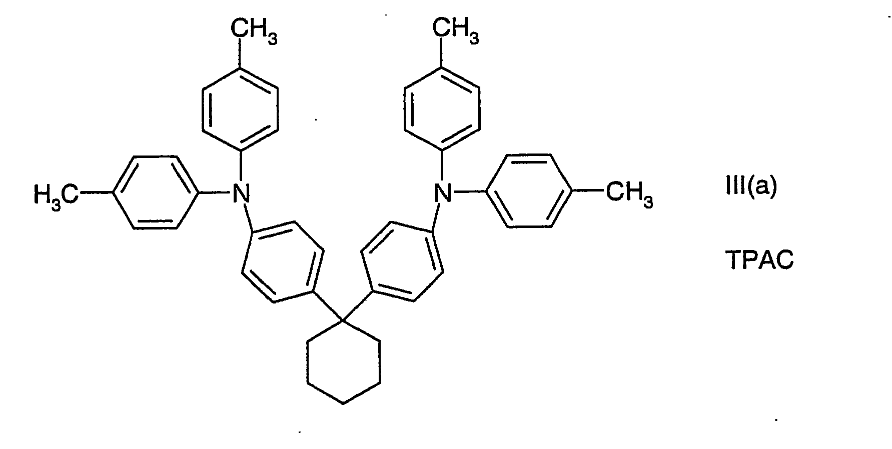

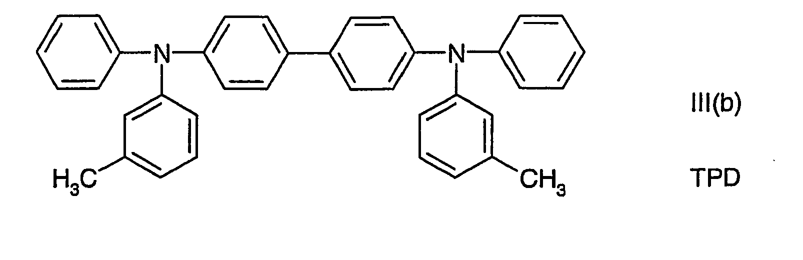

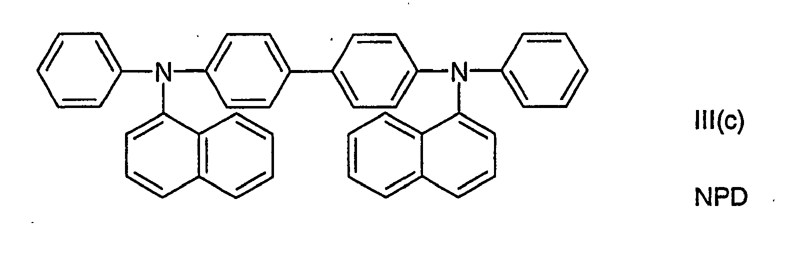

The film is coated from the solution using spin-coating, printing, dipping or blade coating technique. After baking the substrate and vapourising the solvent, the liquid crystalline compounds take a planer alignment. Here, incorporating a small amount of a detergent facilitates the planer alignment. The polymerization and/or the cross-linking reaction is conducted using UV irradiation. A small amount of a photo-initiator may be added to the liquid crystalline mixture to facilitate the polymerization and/or the cross-linking reaction. This process can be mainly liquid crystal orientation stabilization but it can also be pixel wall formation. A film thickness of 10 nm to 1 µm is preferred from the point of view of lowering the operation voltage, and a film thickness of 20 nm to 300 nm is particularly preferred.

Another film is formed on the polymerized and/or the cross-linked liquid crystalline compounds, which is composed of a liquid crystalline mixture that contains at least one compound with a negative dielectric anisotropy and a polymerizable compound having optionally incorporated a material that facilitates the electron transport, for example, triazole derivatives, represented by structures III(d), III(e) and III(f), dissolved in a suitable organic solvent.

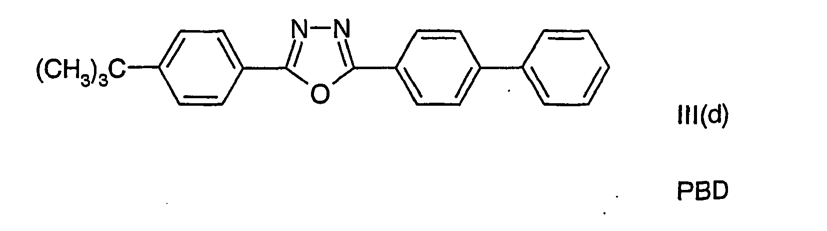

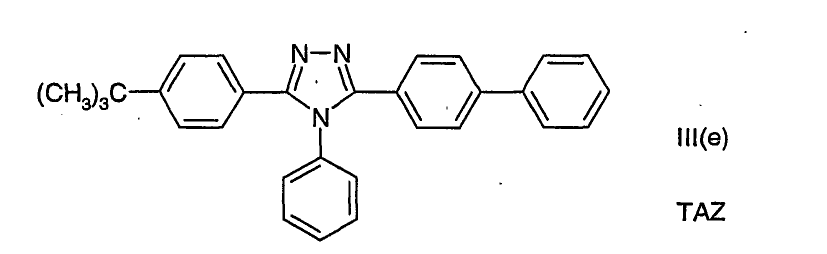

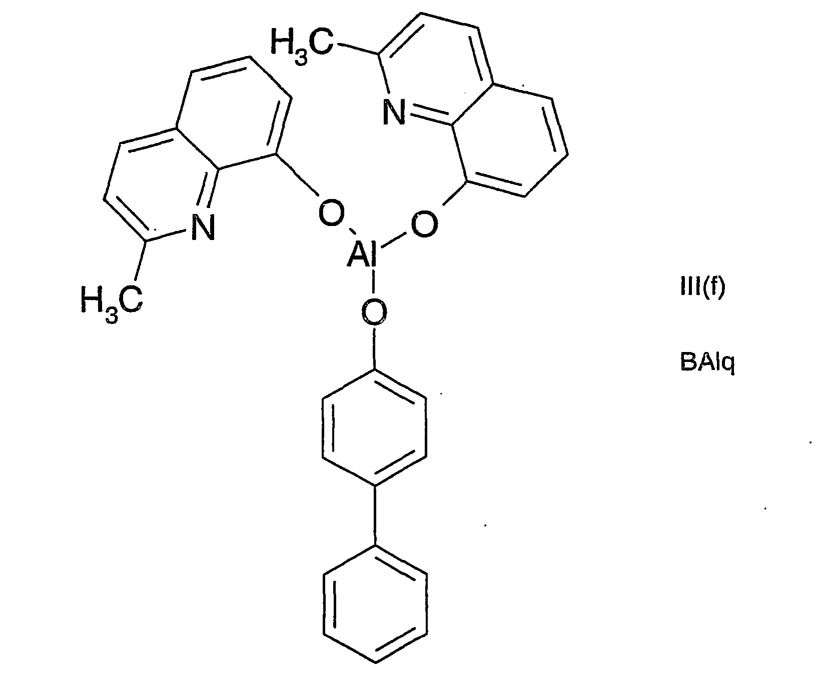

The film is coated from the solution using spin-coating, printing, dipping or blade coating technique. After baking the substrate and vapourising the solvent, the liquid crystalline compounds take a planer alignment. Here, incorporating a small amount of a detergent facilitates the planer alignment.

The polymerization and/or the cross-linking reaction is conducted using UV irradiation. A small amount of a photo-initiator may be added to the liquid crystalline mixture to facilitate the polymerization and/or the cross-linking reaction. This process can be mainly liquid crystal orientation stabilization but it can also be pixel wall formation. A film thickness of 10 nm to 1 µm is preferred from the point of view of lowering the operation voltage, and a film thickness of 20 nm to 300 nm is particularly preferred. The materials which facilitate the electron transport are often fluorescent. Fluorescent dyes with a desired wavelength region may be incorporated in either layer or both layers, if necessary. If the liquid crystalline compounds themselves facilitate the hole and the electron transport, the second layer is not necessary and only incorporating a dye is enough.

As the second layer, an amorphous evaporated 10 nm to 1 µm-thick film of the material that facilitates the electron transport may be used if necessary. On the two layered polymerized and/or cross-linked liquid crystalline film, in the same way as in invention form 5, a small work function metal is formed in a desired pattern through a proper mask as an electron injecting electrode. If this metal is active, the whole device is sealed after the formation of the second electrode **806** without exposing the device to the air. The sealing layer **810** is formed by subsequently depositing an inactive substance on the electrode **806** and/or coating with epoxy resin.

Upon applying a voltage, the incorporated dye starts emitting light above a certain operating voltage. Since the system possesses a negative dielectric anisotropy, the molecular alignment regulated by the electric field agrees well with the molecular orientation in which the injected charges transport smoothly and such an inconvenience that the liquid crystalline molecules stand perpendicular against the substrate as shown in Fig. 2 never occurs. The polymerization and/or the cross-linking improves the mechanical strength and it provides the advantage that the cell becomes quite resistible against bending, which in fact is particularly suitable for plastic substrates, as in invention form 3. In invention form 9, the counter electrode can be formed on the liquid crystalline compounds, and it is relatively easier, compared with invention forms 1 to 4, to seal the whole device after the formation of the electrode without exposing to the air. This enables to use a quite small work function metal as an electrode, which in fact leads to the advantage that devices with a high charge injection efficiency, in other words, a high light emission efficiency are easily processed. In invention form 9, since the layer for the hole transport and the layer for the electron transport are separate, a preferred combination of materials can be designed which in fact leads to the advantage that devices with a high charge transport efficiency, in other words, a high light emission efficiency are easily processed.

### Invention Form 10

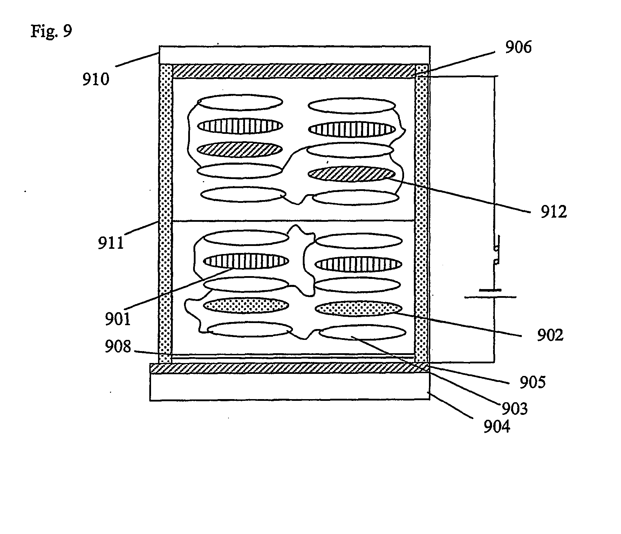

Another form of this invention is explained in Fig. 9. The difference between invention form 9 and 10 is that at least one substrate is subject to an alignment treatment.

Fig. 9 shows a cross section of a luminescent device illustrating the concept of invention form 10.

### Explanation of the symbols:

- 901: compound with a negative dielectric anisotropy
- 902: fluorescent dye or hole transport facilitating compound
- 903: polymerizable compounds
- 904: the first transparent substrate
- 905: transparent electrode
- 906: electrode
- 908: alignment layer
- 910: sealing layer
- 911: wall
- 912: the second fluorescent dye or electron transport facilitating compound

In the same way as in invention form 2, a transparent electrode **905,** such as ITO, is formed on the first transparent substrate **904.** As in invention form 6, a few hundred-nm high pillar spacers (not shown in Fig. 8) may be formed scores of µm apart from one after another using photo-lithography technique, if necessary. Also walls **911** may be formed at the device boundaries when the spacers are formed. They also can be formed after introducing the liquid crystalline mixture through photo-polymerization of the polymerizable compound incorporated in the liquid crystalline mixture using a photo-mask, if necessary. The electrode surface is rubbed using a cloth in order to control the orientation of the liquid crystals. An alignment layer **908,** composed of polyimide etc., can be coated on the first transparent substrate **904** and be rubbed after baking in order to achieve a better alignment of the liquid crystalline compounds. For the alignment layer **908,** besides polyimide, also a mixture of poly(styrene-sulfonate) and poly(2,3-dihydrothieno[3,4-b]-1,4-dioxin) PEDOT) can be applied in order to facilitate the hole injection from the transparent electrode. A fluorinated polymer or PTFE film, as described in Nature, Vol. 352, p. 414 (1991) by Wittman et al., can also be used as an alignment layer **908.** A mixture of poly(styrene-sulfonate) and poly(2,3-dihydrothieno[3,4-b]-1,4-dioxin) PEDOT) on the rubbed fluorinated polymer or PTFE film can also be used as an alignment layer **908.**

In the same way as in invention form 9, a film is formed from a solution which is composed of a liquid crystalline mixture that contains at least one compound with a negative dielectric anisotropy and a polymerizable compound having optionally incorporated a material, that facilitates the hole transport, dissolved in a suitable organic solvent. The film is coated from the solution using spin-coating, printing, dipping or blade coating technique. After baking the substrate and vapourising the solvent, the liquid crystalline compounds take a planer alignment. Here, incorporating a small amount of a detergent facilitates the planer alignment. The polymerization and/or the cross-linking reaction is conducted using UV irradiation. A small amount of a photo-initiator may be added to the liquid crystalline mixture to facilitate the polymerization and/or the cross-linking reaction. This process can be mainly liquid crystal orientation stabilization but it can also be pixel wall formation. A film thickness of 10 nm to 1 µm is preferred from the point of view of lowering the operation voltage, and a film thickness of 20 nm to 300 nm is particularly preferred. Since the first substrate is subject to an alignment treatment, the liquid crystalline compounds align along the alignment direction, and the orientation is fixed by the polymerization and/or the cross-linking reaction. Polarized UV light can be used in order to facilitate the liquid crystalline alignment during the polymerization and/or the cross-linking reaction. Polarized UV light excites only the molecules whose transition moment lies along the polarization direction selectively. Consequently, the director of the liquid crystalline compounds aligns parallel or perpendicular to the polarization direction depending on the nature of the photo-sensitive group. If the polarized UV irradiation is sufficient to align the liquid crystalline compounds, the first substrate alignment treatment can be omitted.

Another film is formed on the polymerized and/or the cross-linked liquid crystalline compounds, which is composed of a liquid crystalline mixture that contains at least one compound with a negative dielectric anisotropy and a polymerizable compound having optionally incorporated a material, that facilitates the electron transport, dissolved in a suitable organic solvent. The film is coated from the solution using spin-coating, printing, dipping or blade coating technique. After baking the substrate and vapourising the solvent, the liquid crystalline compounds take a planer alignment. Since the underneath layer is aligned, the coated liquid crystalline compounds also align. The polymerization and/or the cross-linking reaction is conducted using UV irradiation. The orientation of the liquid crystalline compounds is fixed. Polarized UV light can be used in order to facilitate the liquid crystalline alignment during the polymerization and/or the cross-linking reaction, as for the first layer of the liquid crystalline compounds. This process can be mainly liquid crystal orientation stabilization but it can also be pixel wall formation. A film thickness of 10 nm to 1 µm is preferred from the point of view of lowering the operation voltage, and a film thickness of 20 nm to 300 nm is particularly preferred. The materials which facilitate the electron transport are often fluorescent. Fluorescent dyes with a desired wavelength region may be incorporated in either layer or both layers, if necessary. If the liquid crystalline compounds themselves facilitate the hole and the electron transport, the second layer is not necessary and only incorporating a dye is enough.

On the two layered polymerized and/or cross-linked liquid crystalline film, , in the same way as in invention form 5, a small work function metal is formed in a desired pattern through a proper mask as an electron injecting electrode. If this metal is active, the whole device is sealed after the formation of the second electrode **906** without exposing the device to the air. The sealing layer 910 is formed by subsequently depositing an inactive substance on the electrode 906 and/or coating with epoxy resin.

Upon applying a voltage, the incorporated dye starts emitting light above a certain operating voltage. Since the system possesses a negative dielectric anisotropy, the molecular alignment regulated by the electric field agrees well with the molecular orientation in which the injected charges transport smoothly and such an inconvenience that the liquid crystalline molecules stand perpendicular against the substrate as shown in Fig. 2 never occurs. The polymerization and/or the cross-linking improves the mechanical strength and it provides the advantage that the cell becomes quite resistible against bending, which in fact is particularly suitable for plastic substrates, as in invention form 3. In invention form 10, the counter electrode can be formed on the liquid crystalline compounds, and it is relatively easier, compared with invention forms 1 to 4, to seal the whole device after the formation of the electrode without exposing to the air. This enables to use a quite small work function metal as an electrode, which in fact leads to the advantage that devices with a high charge injection efficiency, in other words, a high light emission efficiency are easily processed. In invention form 10, since the layer for the hole transport and the layer for the electron transport are separate, a preferred combination of materials can be designed which in fact leads to the advantage that devices with a high charge transport efficiency, in other words, a high light emission efficiency are easily processed. In invention form 10, since the liquid crystalline compounds have an uniaxial alignment, when the incorporated dye is dichroic, the emitted light is polarized.

In this invention form, only the method in which both layers are polymerized and/or cross-linked films is explained, however, according to the present invention, the method is not limited to this embodiment. Combinations of the above mentioned methods are also effective, for example, an embodiment where the first layer is a polymerized and/or a cross-linked film and a cell is fabricated in such a way that the second layer can be formed of liquid crystalline compounds without a polymerization and/or a cross-linking reaction and/or evaporation.

In this invention form, only the instances for two layers are explained, however, according to the present invention, the number of layers is not limited to this embodiment. Any preferred number of layers can be fabricated by repeating the same process after the polymerization and/or the cross-linking reaction. It is needless to say that the amount and the kind of incorporated compounds for each layer can be adjusted to achieve the optimum properties.

The present invention is in the following explained in detail with working examples.

### Example 1

A stripe electrode of ITO with 2 mm width is formed on a glass substrate using the photo-lithography technique. Bead spacers with 1.6 µm in diameter are spread and an adhesive agent is painted. Two substrates are aligned so that the two electrodes face and cross each other to overlap as squares. The substrates are pressed and baked at 150°C for 2 hours.

As liquid crystalline mixture that contains at least one compound with a negative dielectric anisotropy, the following mixture is used:

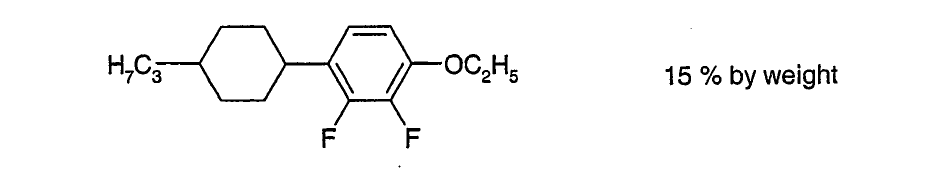

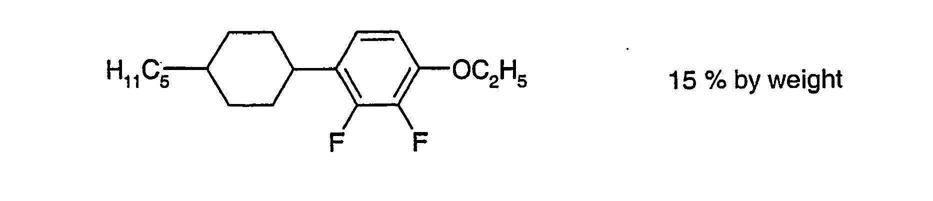

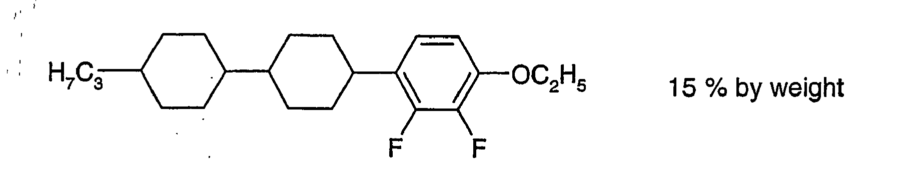

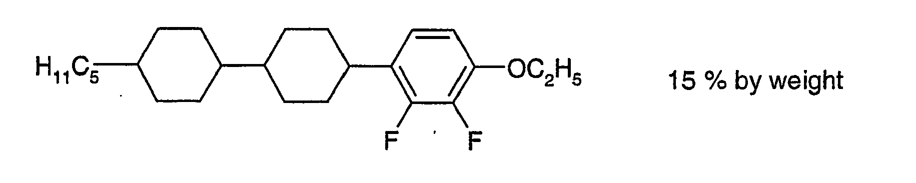

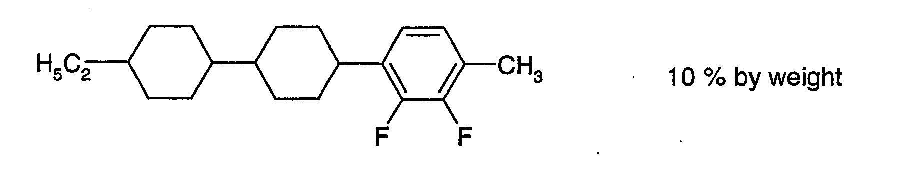

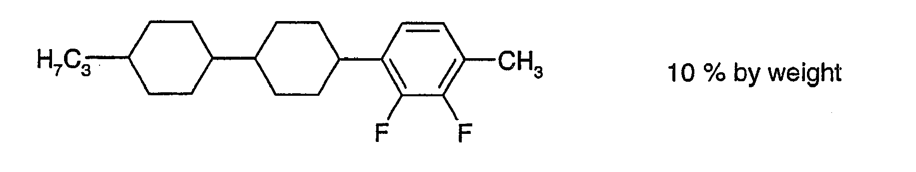

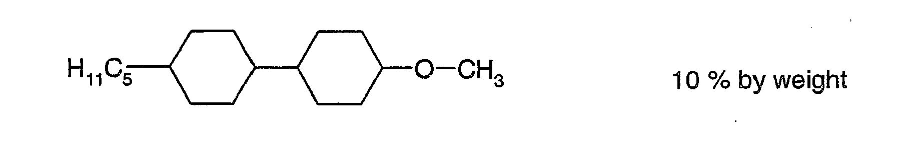

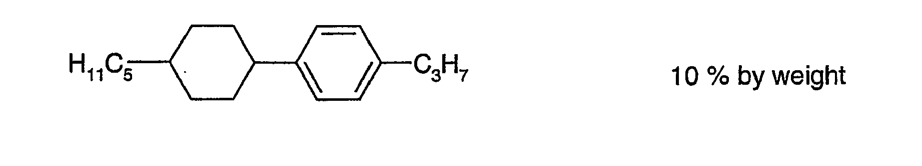

The dielectric anisotropy Δε of the liquid crystalline mixture is: -6.7.

The mixture together with 0.3 % by weight Coumarin 6 is introduced into the fabricated cell. Upon applying a D.C. 50 V to the electrodes a green emission from Coumarin 6 is observed.

The orientation of the liquid crystalline compounds is checked using a polarized microscope and a Shrielen texture is observed. It is found that the long axis of the molecules lies parallel to the substrate.

Besides D.C. voltage, also A.C. voltage is applicable to the cell, since the cell has a symmetrical structure. Upon applying a 40V A.C. (10-100Hz) to the same cell, a green emission from Coumarin 6 is observed. In this case, it is also found that the long axis of the molecules lies parallel to the substrate.

### Comparative example 1

Cyano-biphenyl liquid crystalline compounds (Commercial name: E7, Merck), whose dielectric anisotropy is positive, are, together with 0.3 % by weight Coumarin 6, introduced into the cell fabricated in example 1. A D.C. voltage up to 150 V is applied to the electrodes but no light emission is observed. Applying a higher voltage than 150 V brings about electric breakdown.

The orientation of the liquid crystalline compounds is checked using a polarized microscope. A Shrielen texture is observed when no voltage is applied, which in fact means that the long axis of the molecules lies parallel to the substrate. When a D.C. voltage higher than 15 V is applied, black state is observed and it does not change when the cell is rotated. This means the long axis of the molecules stand perpendicular to the substrate.

### Example 2

In the same way as in example 1, a stripe electrode of ITO is formed on a glass substrate. A polyimide alignment layer (commercial name AL-3046, JSR Corporation) is spin-coated on the substrate and the substrate is baked at 200°C for 1 hour and is rubbed. After spreading bead spacers, as in example 1, cells are fabricated. Two substrates are aligned so that the two electrodes face and cross each other to overlap as squares and the rubbing directions are anti-parallel. In the same way as in example 1, the mixture as disclosed in example 1 is used as liquid crystalline mixture that contains at least one compound with a negative dielectric anisotropy, and this mixture together with 0.3 % by weight of Coumarin 6 is introduced into the fabricated cell. Upon applying a D.C. 50 V to the electrodes a green emission from Coumarin 6 is observed. The polarization of the emitted light is checked using a polarizer, and it is found that the light is polarized.

The orientation of the liquid crystalline compounds is checked using a polarized microscope. It is found that the long axis of the molecules lies parallel to the substrate and the director of the liquid crystalline compounds aligns along the rubbing direction which direction coincides with the polarization direction of the emitted light.

Since the cell structure is symmetrical, a green emission is observed when a ±50V AC voltage is applied regardless of the polarity.

### Example 3

In the same way as in example 2, cells are fabricated. As liquid crystalline mixture that contains at least one compound with a negative dielectric anisotropy, the following mixture is used:

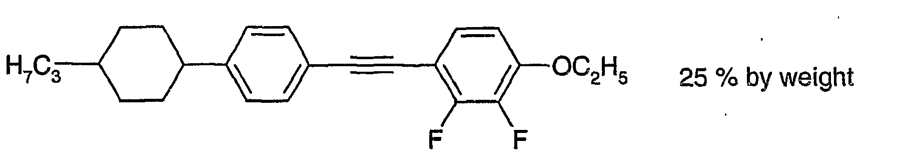

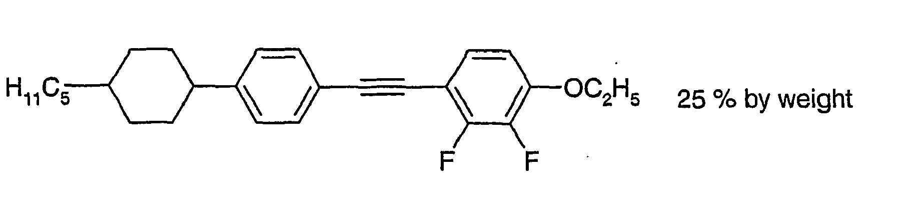

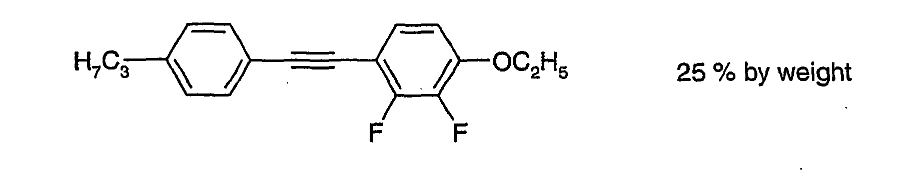

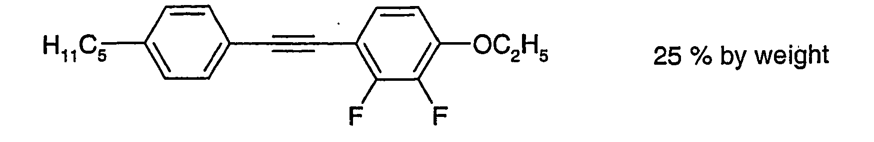

The mixture together with 0.3 % by weight of Coumarin 6 is introduced into the cell. Upon applying a D.C. 20 V to the electrodes a green emission from Coumarin 6 is observed. It is found that the operating voltage is lowered significantly compared with example 1. The polarization of the emitted light is checked using a polarizer, and it is found that the light is polarized along the rubbing direction.

The ionization potential of the liquid crystalline mixture is measured using a Riken-keiki AC-2 photo-electron spectrometer and it is found to be 6.03 eV. For comparison, the ionization potential of the mixture of example 1 is tried to measure. However, it is higher than 6.1 eV, the measurable limit of AC-2, and therefore cannot be measured.

The orientation of the liquid crystalline compounds is checked using a polarized microscope. It is found that the long axis of the molecules lies parallel to the substrate and the director of the liquid crystalline compounds aligns along the rubbing direction.

### Example 4

In the same way as in example 1, a stripe electrode of ITO is formed on a glass substrate, i.e. the first substrate. Using a positive photo resist (commercial name TFR H, Tokyo Ohka-kogyo Co. Ltd.) and its thinner, 300 nm high pillar spacers, which are 10 µm x 10 µm square shaped and 200 µm apart from one after another, are formed and the substrate is baked at 200°C for 2 hours under flowing nitrogen condition to harden the novolak resin. A mixture of poly(styrenesulfonate) and poly(2,3-dihydrothieno[3,4-b]-1,4-dioxin) (PEDOT) purchased from Aldrich is spin-coated on the substrate and the substrate is baked at 100°C for 1 hour under flowing nitrogen condition and is rubbed. As the second substrate, Li-Al (Li 0.2 %) alloy is evaporated on a glass substrate and a stripe electrode with 2 mm width is formed using the photo-lithography technique. The second substrate is rubbed without an alignment layer. The first and the second substrates are aligned so that the two electrodes face and cross each other to overlap as squares and the rubbing directions are anti-parallel. The two substrates are fixed with a UV curable agent.

As liquid crystalline mixture that contains at least one compound with a negative dielectric anisotropy, the mixture of example 3 is used. As a diacrylate having a mesogen moiety, bis{4-6-(1-oxo-2-propenyl)oxyhexyloxybenzoicacid}2-methyl-1,4'-phenylene ester, having the following structure:

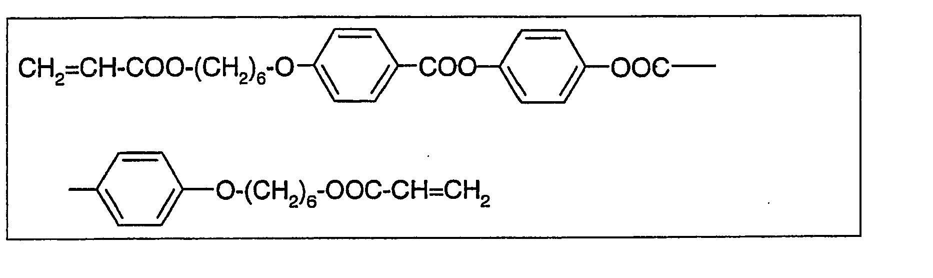

is incorporated in an amount of 3% by weight and Coumarin 6 is incorporated in an amount of 0.3 % by weight. The whole mixture is introduced into the cell. The cell is heated up to 90°C and cooled down slowly. During the cooling period a 5 V A.C. voltage is applied. After having a uniform orientation, the diacrylate is polymerized and/or cross-linked by UV irradiation. Upon applying a 10 V D.C. voltage (ITO: anode, Li-Al (Li 0.2 %) alloy: cathode), a green emission from Coumarin 6 is observed. The polarization of the emitted light is checked using a polarizer, and it is found that the light is polarized along the rubbing direction.

The orientation of the liquid crystalline compounds is checked using a polarized microscope. It is found that the long axis of the molecules lies parallel to the substrate and the director of the liquid crystalline compounds aligns along the rubbing direction.

### Example 5

In the same way as in example 4 cells are fabricated, except the following three points: that is, no Li-Al (Li 0.2 %) alloy electrode on the second substrate, no sealing agent and no A.C. voltage application during the cooling process.

As a liquid crystalline mixture that contains at least one compound with a negative dielectric anisotropy, the mixture of example 1 is used. The diacrylate of example 4 having a mesogen moiety, is incorporated in an amount of 30 % by weight and Coumarin 6 is incorporated in an amount of 0.3 % by weight. The whole mixture is introduced into the cell. The fixing of the substrates is conducted in that using a pressure device the diacrylate is polymerized and/or cross-linked by UV irradiation. The second substrate is removed and Li-Al (Li 0.2 %) alloy is evaporated to obtain a desired pattern through a proper mask. After the evaporation, without exposing the sample to the air, SiO is evaporated. The sample is sealed with a glass substrate and a UV curable resin under flowing nitrogen condition.

Upon applying a 15V D.C. voltage (ITO: anode, Li-Al (Li 0.2 %) alloy: cathode), a green emission from Coumarin 6 is observed. The polarization of the emitted light is checked using a polarizer, and it is found that the light is polarized along the rubbing direction.

### Example 6

In the same way as in example 1, an ITO electrode is formed on the first glass substrate. A mixture of poly(styrenesulfonate) and poly(2,3-dihydrothieno[3,4-b]-1,4-dioxin) (PEDOT) purchased from Aldrich is spin-coated on the substrate and the substrate is baked at 100°C for 1 hour under flowing nitrogen condition and the substrate is rubbed.

The mixture of example 1, 30 % by weight of the diacrylate of example 4 having mesogen moiety, 0.3 % by weight of a detergent (commercial name FX-13, 3M) and 3 % by weight of triphenyldiamine (structure III(b)) are mixed and dissolved in propylene-glycol-monomethyl-ether-acetate (PGMEA) in such a way that a 5 % by weight solution is prepared. The mixture is spin-coated from this solution on the first substrate and the substrate is baked at 80°C for 1 hour. The orientation of the liquid crystalline compounds is checked using a polarized microscope and it is found that the liquid crystalline compounds align along the rubbing direction. The diacrylate monomers are polymerized and/or cross-linked with a UV irradiation under flowing nitrogen condition. The film thickness is 400 nm.

As the second layer, (8-hydroxyquinoline) aluminium (Purchased from Aldrich) is evaporated so that the film thickness is 60 nm.

In the same way as in example 5, Li-Al is coevaporated as a cathode electrode and without exposing the sample to the air, SiO is evaporated. The sample is sealed with a glass substrate and a UV curable resin under flowing nitrogen condition.

Upon applying a 18V D.C. voltage (ITO: anode, Li-Al (Li 0.2 %) alloy: cathode), a green emission from (8-hydroxyquinoline) aluminium is observed.

### Example 7

In the same way as in example 6, an ITO electrode is formed on the first glass substrate. A mixture of poly(styrenesulfonate) and poly(2,3-dihydrothieno[3,4-b]-1,4-dioxin) (PEDOT) purchased from Aldrich is spin-coated on the substrate and the substrate is baked at 100°C for 1 hour under flowing nitrogen condition and the substrate is rubbed.

In the same way as in example 6, the mixture of example 1, 30 % by weight of a diacrylate having a mesogen moiety and having the following structure, 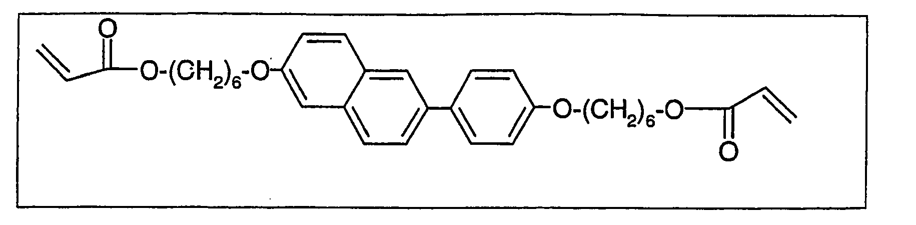 0.3 % by weight of a detergent (commercial name FX-13, 3M) and 0.3 % by weight of Coumarin 6 are mixed and dissolved in chloroform (CHCl₃) in such a way that a 5 % by weight solution is prepared. The mixture is spin-coated on the first substrate and the substrate is baked at 80°C for 1 hour. The substrate was heated up to 120°C and cooled down slowly. The orientation of the liquid crystalline compounds is checked using a polarized microscope and it is found that the liquid crystalline compounds align along the rubbing direction. The diacrylate monomers are polymerized and/or cross-linked with UV irradiation under flowing nitrogen condition. The film thickness is 300 nm.

In the same way as in example 5, Li-Al (Li 0.2 %) alloy is evaporated as a cathode electrode and without exposing the sample to the air, SiO is evaporated. The sample is sealed with a glass substrate and a UV curable resin under flowing nitrogen condition.

Upon applying a 17V D.C. voltage (ITO: anode, Li-Al (Li 0.2 %) alloy: cathode), a green polarized light emission from Coumarin 6 is observed.

### Example 8

In the same way as in example 7 a polymerized and/or cross-linked liquid crystalline sample cell is prepared. The only difference is that the diacrylate of example 7 having mesogen moiety is replaced by the diacrylate having the following structure

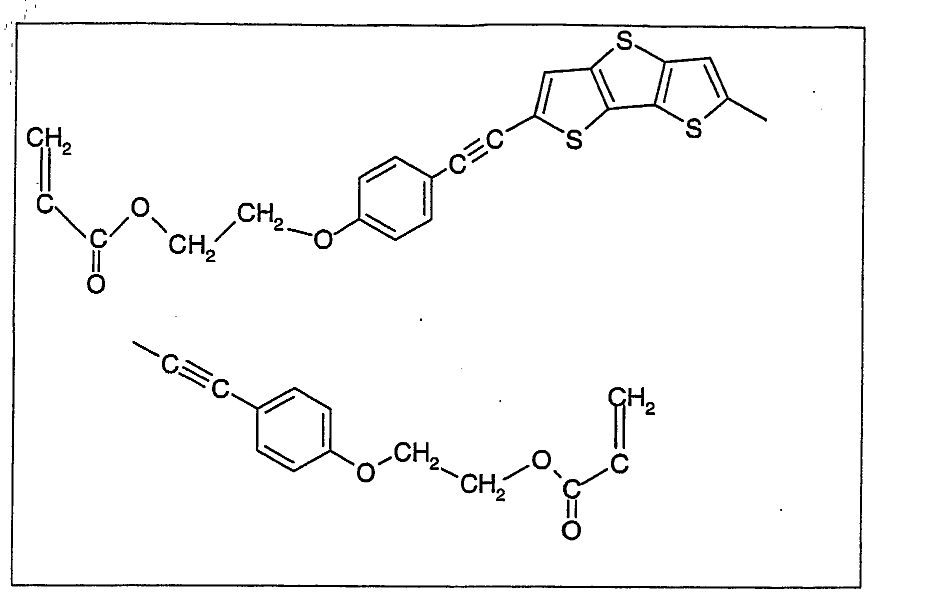

Upon applying a 16V D.C. voltage (ITO: anode, Li-Al (Li 0.2 %) alloy: cathode), a green light emission is observed.

## Claims

1. An electro-luminescent device comprising a first transparent substrate having a transparent electrode on its inner surface and a second substrate having an electrode on its inner surface, the space between both substrates is formed as a cell, **characterized in that** the cell contains an electro-luminescent material, which comprises a liquid crystalline mixture containing at least one liquid crystalline compound with a negative dielectric anisotropy.

2. An electro-luminescent device as claimed in claim 1, **characterized in that** the liquid crystalline compound with a negative dielectric anisotropy is present in the electro-luminescent material in an amount sufficient that the whole electro-luminescent material shows a dielectric anisotropy ≤ 0.

3. An electro-luminescent device as claimed in claim 1 or 2, **characterized in that** the liquid crystalline compound with a negative dielectric anisotropy contains at least one of the following units a to f: 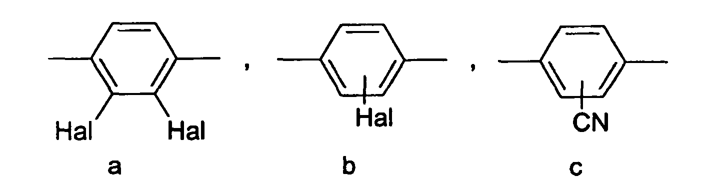 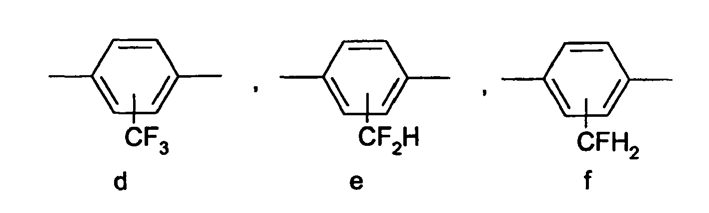 wherein Hal is fluorine, chlorine, bromine.

4. An electro-luminescent device as claimed in claim 3, **characterized in that** the liquid crystalline compound with a negative dielectric anisotropy contains at least one unit a.

5. An electro-luminescent device as claimed in at least one of claims 1 to 4, **characterized in that** it contains at least one compound whose ionization potential is lower than 6.1 eV.

6. An electro-luminescent device as claimed in claim 5, **characterized in that** the at least one compound whose ionization potential is lower than 6.1 eV is a tolane derivative.

7. An electro-luminescent device as claimed in claim 6, **characterized in that** the tolane derivative is a compound of the following formula: 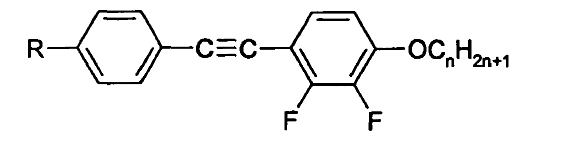 wherein
n is an integer from 1 to 5 and R is an alkyl group whose carbon number is from 1 to 7 or an alkylcyclohexyl group whose carbon number of the alkyl group is from 1 to 7.

8. An electro-luminescent device as claimed in at least one of claims 1 to 7, **characterized in that** the liquid crystalline mixture shows a nematic phase at least at room temperature.

9. An electro-luminescent device as claimed in at least one of claims 1 to 8, **characterized in that** the liquid crystalline mixture additionally contains at least one fluorescent dye.

10. An electro-luminescent device as claimed in claim 9, **characterized in that** the fluorescent dye is a dichroic dye.

11. An electro-luminescent device as claimed in at least one of claims 1 to 10, **characterized in that** the liquid crystalline mixture additionally contains at least one polymerizable compound.

12. An electro-luminescent device as claimed in claim 11, **characterized in that** the at least one polymerizable compound contains a mesogenic group.

13. An electro-luminescent device as claimed in at least one of claims 1 to 12, **characterized in that** an alignment layer is coated on at least one substrate.

14. An electro-luminescent device as claimed in at least one of claims 1 to 13 comprising at least one hole transport layer and at least one electron transport layer, **characterized in that** from the at least one hole transport layer toward the at least one electron transport layer, at least one pair of adjacent layers' ionization potential becomes higher and higher and/or at least one pair of adjacent layers' energy of lowest unoccupied molecular orbit becomes lower and lower.

15. An electro-luminescent device as claimed in claim 14, wherein each layer comprises at least one luminous material, **characterized in that** the ionization potential of the luminous material of the at least one electron transport layer is higher than the ionization potential of the luminous material of the at least one hole transport layer and/or the energy of lowest unoccupied molecular orbit of the luminous material of the at least one electron transport layer is lower than the energy of lowest unoccupied molecular orbit of the luminous material of the at least one hole transport layer.

16. An electro-luminescent device as claimed in at least one of claims 1 to 15, **characterized in that** it contains separated pixel areas.

17. An electro-luminescent device as claimed in claim 16, **characterized in that** the separated pixel areas contain at least a two-color luminescent liquid crystalline mixture.

18. A method of preparation an electro-luminescent device as claimed in claim 11 or 12, **characterized in that** the liquid crystalline mixture containing at least one polymerizable compound is aligned **in that** an electric field is applied.

19. A method as claimed in claim 18, **characterized in that** the aligned liquid crystalline mixture is fixed via polymerization and/or cross-linking reaction.

20. A method of preparation an electro-luminescent device as claimed in claim 13, **characterized in that** the alignment layer is formed, the formed alignment layer is aligned and the achieved alignment of the alignment layer is fixed via polymerization and/or cross-linking reaction.

21. A method as claimed in claim 20, **characterized in that** on the alignment layer at least one additional layer is formed, which has a different function than the alignment layer.

## Patentansprüche

1. Elektrolumineszenzvorrichtung enthaltend ein erstes transparentes Substrat mit einer transparenten Elektrode auf seiner Innenfläche und ein zweites Substrat mit einer Elektrode auf seiner Innenfläche, wobei der Raum zwischen den beiden Substraten als Zelle ausgebildet ist, **dadurch gekennzeichnet, dass** die Zelle ein Elektrolumineszenzmaterial enthält, das eine flüssigkristalline Mischung enthaltend mindestens eine flüssigkristalline Verbindung mit negativer dielektrischer Anisotropie enthält.

2. Elektrolumineszenzvorrichtung nach Anspruch 1, **dadurch gekennzeichnet, dass** die flüssigkristalline Verbindung mit negativer dielektrischer Anisotropie in dem Elektrolumineszenzmaterial in einer Menge vorliegt, die ausreicht, dass das gesamte Elektrolumineszenzmaterial eine dielektrische Anisotropie ≤ 0 aufweist.

3. Elektrolumineszenzvorrichtung nach Anspruch 1 oder 2, **dadurch gekennzeichnet, dass** die flüssigkristalline Verbindung mit negativer dielektrischer Anisotropie mindestens eine der folgenden Einheiten a bis f enthält: 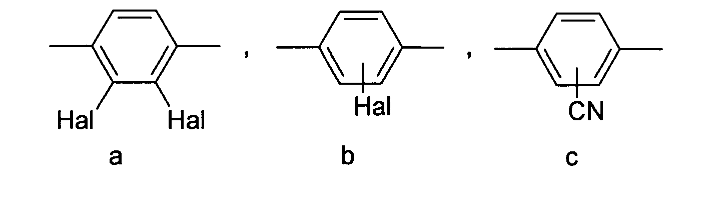 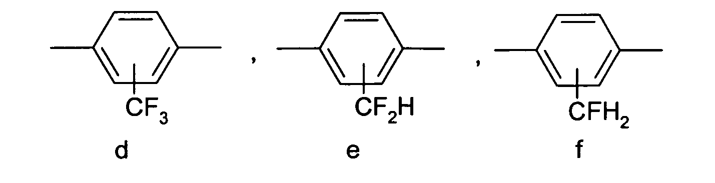 worin Hal Fluor, Chlor, Brom bedeutet.

4. Elektrolumineszenzvorrichtung nach Anspruch 3, **dadurch gekennzeichnet, dass** die flüssigkristalline Verbindung mit negativer dielektrischer Anisotropie mindestens eine Einheit a enthält.

5. Elektrolumineszenzvorrichtung nach mindestens einem der Ansprüche 1 bis 4, **dadurch gekennzeichnet, dass** sie mindestens eine Verbindung enthält, deren Ionisationspotential kleiner als 6,1 eV ist.

6. Elektrolumineszenzvorrichtung nach Anspruch 5, **dadurch gekennzeichnet, dass** die mindestens eine Verbindung, deren lonisationspotential kleiner als 6,1 eV ist, ein Tolanderivat ist.

7. Elektrolumineszenzvorrichtung nach Anspruch 6, **dadurch gekennzeichnet, dass** das Tolanderivat eine Verbindung der folgenden Formel ist: 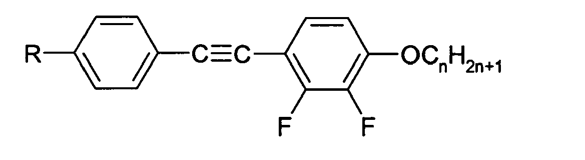 worin
n eine ganze Zahl von 1 bis 5 und R eine Alkylgruppe, deren Kohlenstoffanzahl von 1 bis 7 beträgt, oder eine Alkylcyclohexylgruppe, deren Kohlenstoffanzahl in der Alkylgruppe 1 bis 7 beträgt, bedeutet.

8. Elektrolumineszenzvorrichtung nach mindestens einem der Ansprüche 1 bis 7, **dadurch gekennzeichnet, dass** die flüssigkristalline Mischung zumindest bei Raumtemperatur eine nematische Phase aufweist.

9. Elektrolumineszenzvorrichtung nach mindestens einem der Ansprüche 1 bis 8, **dadurch gekennzeichnet, dass** die flüssigkristalline Mischung zusätzlich mindestens einen Fluoreszenzfarbstoff enthält.

10. Elektrolumineszenzvorrichtung nach Anspruch 9, **dadurch gekennzeichnet, dass** der Fluoreszenzfarbstoff ein dichroitischer Farbstoff ist.

11. Elektrolumineszenzvorrichtung nach mindestens einem der Ansprüche 1 bis 10, **dadurch gekennzeichnet, dass** die flüssigkristalline Mischung zusätzlich mindestens eine polymerisierbare Verbindung enthält.

12. Elektrolumineszenzvorrichtung nach Anspruch 11, **dadurch gekennzeichnet, dass** die mindestens eine polymerisierbare Verbindung eine mesogene Gruppe enthält.

13. Elektrolumineszenzvorrichtung nach mindestens einem der Ansprüche 1 bis 12, **dadurch gekennzeichnet, dass** auf mindestens ein Substrat eine Orientierungsschicht aufgetragen ist.

14. Elektrolumineszenzvorrichtung nach mindestens einem der Ansprüche 1 bis 13, enthaltend mindestens eine Lochtransportschicht und mindestens eine Elektronentransportschicht, **dadurch gekennzeichnet, dass** von der mindestens einen Lochtransportschicht zur mindestens einen Elektronentransportschicht das Ionisationspotential mindestens eines Paares von benachbarten Schichten immer höher wird und/oder die Energie des niedrigsten unbesetzten Molekülorbitals mindestens eines Paares von benachbarten Schichten immer niedriger wird.

15. Elektrolumineszenzvorrichtung nach Anspruch 14, worin jede Schicht mindestens ein Leuchtmaterial enthält, **dadurch gekennzeichnet, dass** das Ionisationspotential des Leuchtmaterials der mindestens einen Elektronentransportschicht höher ist als das lonisationspotential des Leuchtmaterials der mindestens einen Lochtransportschicht und/oder die Energie des niedrigsten unbesetzten Molekülorbitals des Leuchtmaterials der mindestens einen Elektronentransportschicht niedriger ist als die Energie des niedrigsten unbesetzten Molekülorbitals des Leuchtmaterials der mindestens einen Lochtransportschicht.

16. Elektrolumineszenzvorrichtung nach mindestens einem der Ansprüche 1 bis 15, **dadurch gekennzeichnet, dass** sie getrennte Pixelbereiche enthält.

17. Elektrolumineszenzvorrichtung nach Anspruch 16, **dadurch gekennzeichnet, dass** die getrennten Pixelbereiche mindestens eine zweifarbige lumineszente flüssigkristalline Mischung enthalten.

18. Verfahren zur Herstellung einer Elektrolumineszenzvorrichtung nach Anspruch 11 oder 12, **dadurch gekennzeichnet, dass** die mindestens eine polymerisierbare Verbindung enthaltende flüssigkristalline Mischung durch Anlegen eines elektrischen Feldes orientiert wird.

19. Verfahren nach Anspruch 18, **dadurch gekennzeichnet, dass** die orientierte flüssigkristalline Mischung durch Polymerisation und/oder Vernetzungsreaktion fixiert wird.

20. Verfahren zur Herstellung einer Elektrolumineszenzvorrichtung nach Anspruch 13, **dadurch gekennzeichnet, dass** die Orientierungsschicht gebildet, die gebildete Orientierungsschicht orientiert und die erzielte Orientierung der Orientierungsschicht durch Polymerisation und/oder Vernetzungsreaktion fixiert wird.

21. Verfahren nach Anspruch 20, **dadurch gekennzeichnet, dass** auf der Orientierungsschicht mindestens eine zusätzliche Schicht gebildet wird, die eine andere Funktion als die Orientierungsschicht hat.

## Revendications

1. Dispositif électroluminescent comprenant un premier substrat transparent comportant une électrode transparente sur sa surface interne et un second substrat comportant une électrode sur sa surface interne, l'espace entre les deux substrats est formé en tant que cellule, **caractérisé en ce que** la cellule contient un matériau électroluminescent, lequel comprend un mélange cristallin liquide contenant au moins un composé cristallin liquide présentant une anisotropie diélectrique négative.

2. Dispositif électroluminescent selon la revendication 1, **caractérisé en ce que** le composé cristallin liquide présentant une anisotropie diélectrique négative est présent dans le matériau électroluminescent selon une quantité suffisante pour que le matériau électroluminescent pris dans sa globalité présente une anisotropie diélectrique ≤ 0.

3. Dispositif électroluminescent selon la revendication 1 ou 2, **caractérisé en ce que** le composé cristallin liquide présentant une anisotropie diélectrique négative contient au moins l'une des unités qui suivent a à f: 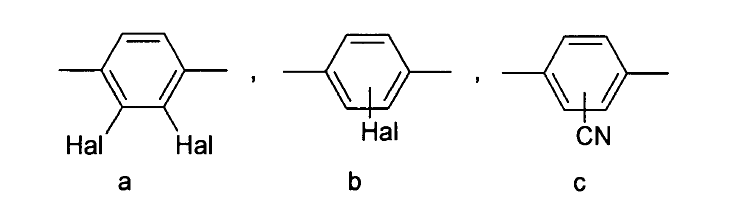 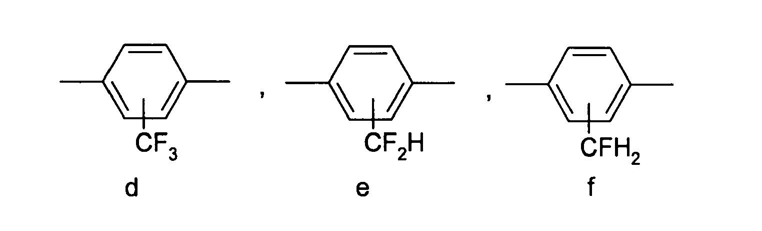 dans lesquelles Hal est fluor, chlore, brome.

4. Dispositif électroluminescent selon la revendication 3, **caractérisé en ce que** le composé cristallin liquide présentant une anisotropie diélectrique négative contient au moins une unité a.

5. Dispositif électroluminescent selon au moins l'une des revendications 1 à 4, **caractérisé en ce qu'**il contient au moins un composé dont le potentiel d'ionisation est inférieur à 6,1 eV.

6. Dispositif électroluminescent selon la revendication 5, **caractérisé en ce que** l'au moins un composé dont le potentiel d'ionisation est inférieur à 6,1 eV est un dérivé de tolane.

7. Dispositif électroluminescent selon la revendication 6, **caractérisé en ce que** le dérivé de tolane est un composé de la formule qui suit : 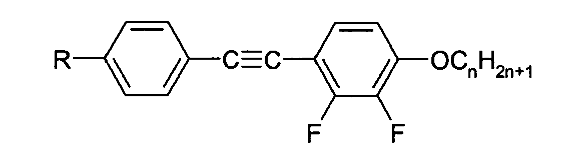 dans laquelle
n est un entier de 1 à 5 et R est un groupe alkyle dont le nombre de carbones est de 1 à 7 ou un groupe alkylcyclohexyle dont le nombre de carbones du groupe alkyle est de 1 à 7.

8. Dispositif électroluminescent selon au moins l'une des revendications 1 à 7, **caractérisé en ce que** le mélange cristallin liquide présente une phase nématique au moins à température ambiante.

9. Dispositif électroluminescent selon au moins l'une des revendications 1 à 8, **caractérisé en ce que** le mélange cristallin liquide contient de façon additionnelle au moins un colorant fluorescent.

10. Dispositif électroluminescent selon la revendication 9, **caractérisé en ce que** le colorant fluorescent est un colorant dichroïque.

11. Dispositif électroluminescent selon au moins l'une des revendications 1 à 10, **caractérisé en ce que** le mélange cristallin liquide contient de façon additionnelle au moins un composé polymérisable.

12. Dispositif électroluminescent selon la revendication 11, **caractérisé en ce que** l'au moins un composé polymérisable contient un groupe mésogène.

13. Dispositif électroluminescent selon au moins l'une des revendications 1 à 12, **caractérisé en ce qu'**une couche d'alignement est déposée sur au moins un substrat.

14. Dispositif électroluminescent selon au moins l'une des revendications 1 à 13, comprenant au moins une couche de transport de trous et au moins une couche de transport d'électrons, **caractérisé en ce que**, depuis l'au moins une couche de transport de trous en direction de l'au moins une couche de transport d'électrons, le potentiel d'ionisation d'au moins une paire de couches adjacentes devient de plus en plus élevé et/ou l'énergie d'orbite moléculaire non occupée la plus basse d'au moins une paire de couches adjacentes devient de plus en plus faible.

15. Dispositif électroluminescent selon la revendication 14, dans lequel chaque couche comprend au moins un matériau lumineux, **caractérisé en ce que** le potentiel d'ionisation du matériau lumineux de l'au moins une couche de transport d'électrons est supérieur au potentiel d'ionisation du matériau lumineux de l'au moins une couche de transport de trous et/ou l'énergie d'orbite moléculaire non occupée la plus basse du matériau lumineux de l'au moins une couche de transport d'électrons est inférieure à l'énergie d'orbite moléculaire non occupée la plus basse du matériau lumineux de l'au moins une couche de transport de trous.

16. Dispositif électroluminescent selon au moins l'une des revendications 1 à 15, **caractérisé en ce qu'**il contient des zones de pixels séparées.

17. Dispositif électroluminescent selon la revendication 16, **caractérisé en ce que** les zones de pixels séparées contiennent au moins un mélange cristallin liquide luminescent bichrome.

18. Procédé de préparation d'un dispositif électroluminescent selon la revendication 11 ou 12, **caractérisé en ce que** le mélange cristallin liquide contenant au moins un composé polymérisable est aligné lorsqu'un champ électrique est appliqué.

19. Procédé selon la revendication 18, **caractérisé en ce que** le mélange cristallin liquide aligné est fixé via une réaction de polymérisation et/ou de réticulation.

20. Procédé de préparation d'un dispositif électroluminescent selon la revendication 13, **caractérisé en ce que** la couche d'alignement est formée, la couche d'alignement formée est alignée et l'alignement réalisé de la couche d'alignement est fixé via une réaction de polymérisation et/ou de réticulation.

21. Procédé selon la revendication 20, **caractérisé en ce que**, sur la couche d'alignement, au moins une couche additionnelle est formée, laquelle présente une fonction différente de celle de la couche d'alignement.
